(19) Europäisches Patentamt / European Patent Office / Office européen des brevets

(11) **EP 4 383 782 A1**

(12) **EUROPEAN PATENT APPLICATION**
published in accordance with Art. 153(4) EPC

(43) Date of publication:
**12.06.2024 Bulletin 2024/24**

(21) Application number: **21952799.1**

(22) Date of filing: **05.08.2021**

(51) International Patent Classification (IPC):
**H04W 16/28** *(2009.01)*

(52) Cooperative Patent Classification (CPC):
**H04W 16/28**

(86) International application number:
**PCT/JP2021/029142**

(87) International publication number:
**WO 2023/012974 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **MATSUMURA, Yuki**
  **Tokyo 100-6150 (JP)**

• **NAGATA, Satoshi**
  **Tokyo 100-6150 (JP)**
• **SUN, Weiqi**
  **Beijing 100190 (CN)**
• **WANG, Jing**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes a receiving section that receives a Radio Resource Control (RRC) information element related to an uplink channel configuration, the RRC information element being associated with configuration information related to a transmission configuration indication (TCI) state list applied to at least one of a plurality of channels and a plurality of signals, and a control section that determines, on the basis of the configuration information, a TCI state applied per uplink channel. According to one aspect of the present disclosure, it is possible to appropriately perform transmission power control for a UL channel/signal even when a TCI state applicable to a plurality of channels/signals is used.

```
PUSCH-Config ::=          SEQUENCE {
    ...
    pusch-PowerControl        PUSCH-PowerControl                            OPTIONAL,  -- Need M
    tci-StatesToAddModList_r17     SEQUENCE (SIZE(1..maxNrofTCI-States)) OF TCI-State     OPTIONAL,  -- Need N
    tci-StatesToReleaseList_r17    SEQUENCE (SIZE(1..maxNrofTCI-States)) OF TCI-StateId   OPTIONAL,  -- Need N
    ...
}
```

FIG. 18

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), it is studied that a user terminal (terminal, User Equipment (UE)) controls transmission/reception processing, based on information related to quasi-co-location (QCL) (QCL assumption / Transmission Configuration Indication (TCI) state / spatial relation) applicable to a plurality of channels/signals.

However, a transmission power control method for an uplink (UL) channel/signal in a case where the TCI state applicable to the plurality of channels/signals is used is indefinite. Unless the transmission power control method is definite, degradation in communication quality, throughput reduction, and the like may occur.

Thus, an object of the present disclosure is to provide a terminal, a radio communication method, and a base station that appropriately perform transmission power control for a UL channel/signal even when a TCI state applicable to a plurality of channels/signals is used.

Solution to Problem

A terminal according to one aspect of the present disclosure includes a receiving section that receives a Radio Resource Control (RRC) information element related to an uplink channel configuration, the RRC information element being associated with configuration information related to a transmission configuration indication (TCI) state list applied to at least one of a plurality of channels and a plurality of signals, and a control section that determines, on the basis of the configuration information, a TCI state applied per uplink channel.

Advantageous Effects of Invention

According to one aspect of the present disclosure, it is possible to appropriately perform transmission power control for a UL channel/signal even when a TCI state applicable to a plurality of channels/signals is used.

Brief Description of Drawings

    [FIG. 1] FIG. 1 is a diagram to show an example of an RRC information element related to PUSCH transmission power control in Rel. 16.

[FIG. 2] FIG. 2 is a diagram to show an example of an RRC information element related to open loop power control in Rel. 16.

[FIG. 3] FIG. 3 is a diagram to show an example of an RRC information element for PUCCH transmission power control in Rel. 16.

[FIG. 4] FIG. 4 is a diagram to show an example of an RRC information element for SRS transmission power control in Rel. 16.

[FIG. 5] FIG. 5 is a diagram to show an example of simultaneous beam update over a plurality of CCs.

[FIG. 6] FIGS. 6A and 6B are diagrams to show examples of a common beam.

[FIG. 7] FIG. 7 is a diagram to show an example of configuration of transmission power control parameters for a PUSCH, a PUCCH, and an SRS in Rel. 15/16.

[FIG. 8] FIG. 8 is a diagram to show an example of a set of a plurality of TPC parameters according to Embodiment 1-1.

[FIG. 9] FIGS. 9A and 9B are diagrams to show examples of a set of a plurality of TPC parameters and an information element according to Embodiment 1-1-1.

[FIG. 10] FIGS. 10A and 10B are diagrams to show examples of a set of a plurality of TPC parameters and an information element according to Embodiment 1-1-2.

[FIG. 11] FIG. 11 is a diagram to show an example of application of a TPC parameter according to Embodiment 1-2.

[FIG. 12] FIGS. 12A to 12C are each a diagram to show an example of a TPC parameter set for a UL channel/signal according to a second embodiment.

[FIG. 13] FIGS. 13A and 13B are diagrams to show examples of a set of a plurality of TPC parameters and an information element according to Embodiment 2-1.

[FIG. 14] FIGS. 14A and 14B are diagrams to show examples of a set of a plurality of TPC parameters and an information element according to Embodiment 2-2.

[FIG. 15] FIGS. 15A and 15B are diagrams to show examples of TPC parameter sets according to a comparison between a first embodiment and a second embodiment.

[FIG. 16] FIG. 16 is a diagram to show an example of configuration of an SRS resource set, an SRS resource, a TCI state, and a TPC parameter set ID according to variation 3.

[FIG. 17] FIG. 17 is a diagram to show another example of the configuration of an SRS resource set, an SRS resource, a TCI state, and a TPC parameter set ID according to variation 3.

[FIG. 18] FIG. 18 is a diagram to show an example of an RRC information element according to Embodiment 4-1-1.

[FIG. 19] FIG. 19 is a diagram to show an example of an RRC information element according to Embodiment 4-1-2.

[FIG. 20] FIG. 20 is a diagram to show an example of an RRC information element according to Embodiment 4-2.

[FIG. 21] FIG. 21 is a diagram to show an example of a set of a plurality of TPC parameters according to a fifth embodiment.

[FIG. 22] FIG. 22 is a diagram to show an example of a schematic structure of a radio communication system according to one embodiment.

[FIG. 23] FIG. 23 is a diagram to show an example of a structure of a base station according to one embodiment.

[FIG. 24] FIG. 24 is a diagram to show an example of a structure of a user terminal according to one embodiment.

[FIG. 25] FIG. 25 is a diagram to show an example of a hardware structure of the base station and the user terminal according to one embodiment.

Description of Embodiments

(TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:

- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

For the PDCCH and the PDSCH, a QCL type A RS may always be configured, and a QCL type D RS may be configured additionally. It is difficult to estimate a Doppler shift, a delay, and the like by using DMRS one-shot reception, and thus the QCL type A RS is used for improvement in channel estimation accuracy. The QCL type D RS is used for receive beam determination in DMRS reception.

For example, TRS 1-1, TRS 1-2, TRS 1-3, and TRS 1-4 are transmitted, and TRS 1-1 is notified as a QCL type C/D RS by a TCI state for the PDSCH. The TCI state is notified, thereby allowing the UE to use, for DMRS reception / channel estimation for the PDSCH, information obtained from a result of past periodic reception/measurement of TRS 1-1. In this case, a QCL source for the PDSCH is TRS 1-1, and a QCL target is the DMRS for the PDSCH.

(Transmission Power Control)

<PUSCH Transmission Power Control>

In NR, transmission power for a PUSCH is controlled on the basis of a TPC command (also referred to as a value, an increasing/decreasing value, a correction value, or the like) indicated by a value of a certain field (also referred to as a transmission power control (TPC) command field or the like) in DCI.

For example, when a UE transmits the PUSCH on active UL BWP b on carrier f of serving cell c by using a parameter set having index j (open-loop parameter set) and index 1 of a power control adjustment state, transmission power for the PUSCH ($P_{PUSCH,b,f,c}$ (i, j, $q_d$, l)) in PUSCH transmission occasion (also referred to as a transmission period or the like) i may be represented by Equation (1) described below.

Here, for the power control adjustment state, whether the power control adjustment state has a plurality of states (for example, 2 states) or a single state may be configured by a higher layer parameter. When a plurality of power control adjustment states are configured, one of the plurality of power control adjustment states may be identified by index 1 (for example, 1 ∈ {0, 1}). The power control adjustment state may be referred to as a PUSCH power control adjustment state, a first or second state, or the like. In the present disclosure, index 1 may be referred to as a closed-loop index.

PUSCH transmission occasion i is a certain period in which the PUSCH is transmitted, and may be constituted by, for example, one or more symbols, one or more slots, or the like.

[Math. 1]

(Equation 1)

$$P_{PUSCH,b,f,c}(i,j,q_d,l) =$$

$$min \left\{ \begin{array}{l} P_{CMAX,f,c}(i), \\ P_{O\_PUSCH,b,f,c}(j) + 10\log_{10}\left(2^{\mu} \cdot M_{RB,b,f,c}^{PUSCH}(i)\right) + \alpha_{b,f,c}(j) \cdot PL_{b,f,c}(q_d) + \Delta_{TF,b,f,c}(i) + f_{b,f,c}(i,l) \end{array} \right\}$$

In Equation (1), $P_{CMAX,f,c}(i)$ is, for example, transmission power (also referred to as maximum transmission power, UE maximum output power, or the like) of a user terminal configured for carrier f of serving cell c in transmission occasion i. $P_{O\_PUSCH,b,f,c}(j)$ is, for example, a parameter related to target received power configured for active UL BWP b on carrier f of serving cell c in parameter set configuration j (also referred to as, for example, a parameter related to transmission power offset, transmission power offset P0, a target received power parameter, or the like).

$M_{RB,b,f,c}^{PUSCH}(i)$ is, for example, the number of resource blocks (bandwidths) allocated to the PUSCH for transmission occasion i in active UL BWP b on carrier f in serving cell c and with subcarrier spacing μ. $\alpha_{b,f,c}(j)$ is a value provided by a higher layer parameter (also referred to as, for example, msg3-Alpha, p0-PUSCH-Alpha, a fractional factor, or the like).

$PL_{b,f,c}(q_d)$ is, for example, a pathloss (pathloss compensation) calculated in the user terminal by using index $q_d$ of a reference signal (pathloss (PL) reference RS, PL-RS, pathloss measurement DL RS, PUSCH-PathlossReferenceRS) for a downlink BWP associated with active UL BWP b on carrier f of serving cell c.

$\Delta_{TF,b,f,c}(i)$ is a transmission power adjustment component (offset, transmission format compensation) for UL BWP b on carrier f of serving cell c.

$f_{b,f,c}(i, 1)$ is a value based on a TPC command with the above-described power control adjustment state index 1 for the active UL BWP on carrier f in serving cell c and transmission occasion i (for example, a power control adjustment state, an accumulated value of the TPC command, or a closed-loop value). For example, $f_{b,f,c}(i, 1)$ may be represented by Equation (2). 1 may be referred to as a closed-loop index.

[Math. 2]

(Equation 2)

$$f_{b,f,c}(i,l) = f_{b,f,c}(i - i_0, l) + \sum_{m=0}^{C(D_i)-1} \delta_{PUSCH,b,f,c}(m,l)$$

In Equation (2), $\delta_{PUSCH,b,f,c}(m, 1)$ is a TPC command value in PUSCH transmission occasion m. $\sum_{m=0}^{C(D\_i)-1} \delta_{PUSCH,b,f,c}(m, 1)$ is the sum of TPC command values in a TPC command value set of group C ($D_i$) between $K_{PUSCH}(i-i_0)-1$ symbols before PUSCH transmission occasion $i-i_0$ and $K_{PUSCH}(i)$ symbols before PUSCH transmission occasion i. Here, io is an integer greater than or equal to 1. A TPC command value in a certain PUSCH transmission occasion may be a TPC command indicated by a TPC command field value in DCI (for example, DCI format 1_0 or DCI format 1_1) detected in active UL BWP b on carrier f of serving cell c, or may be a TPC command indicated by a TPC command field value in DCI (for example, DCI format 2_2) (to be CRC scrambled) having a CRC parity bit scrambled by a specific Radio Network Temporary Identifier (RNTI) (for example, TPC-PUSCH-RNTI).

When the pathloss reference RS (for example, PUSCH-PathlossReferenceRS) is not provided for the UE or when a dedicated higher layer parameter is not provided for the UE, the UE may calculate $PL_{b,f,c}(q_d)$ by using an RS resource from an SSB used for obtaining a Master Information Block (MIB).

When the UE is configured with a number of RS resource indices being up to a value of a maximum number of pathloss reference RSs (for example, maxNrofPUSCH-PathlossReferenceRSs), and the UE is configured by the pathloss reference RS with a set of respective RS configurations for the RS resource indices, the set for the RS resource indices may include one or both of a set of SS/PBCH block indices and a set of CSI-RS resource indices. The UE may identify RS resource index $q_d$ in the set for the RS resource indices.

When PUSCH transmission is scheduled by a Random Access Response (RAR) UL grant, the UE may use same RS resource index $q_d$ as that for corresponding PRACH transmission.

When an SRI-based PUSCH power control configuration (for example, SRI-PUSCH-PowerControl) is provided for the UE, and one or more values of IDs of the pathloss reference RS are provided for the UE, mapping between a set of values for an SRI field in DCI format 0_1 and a set of ID values for the pathloss reference RS may be obtained from higher layer signaling (for example, sri-PUSCH-PowerControl-Id in SRI-PUSCH-PowerControl). The UE may determine RS resource index $q_d$ on the basis of an ID of the pathloss reference RS mapped to an SRI field value in DCI format 0_1 for scheduling the PUSCH.

When PUSCH transmission is scheduled by DCI format 0_0, and PUCCH spatial relation information for a PUCCH resource having the lowest index for active UL BWP b on each carrier f and in serving cell c is not provided for the UE, the UE may use same RS resource index $q_d$ as that for PUCCH transmission in the PUCCH resource.

When PUSCH transmission is scheduled by DCI format 0_0, and a spatial setting for PUCCH transmission is not provided for the UE, when PUSCH transmission is scheduled by DCI format 0_1 not including the SRI field, or when the SRI-based PUSCH power control configuration is not provided for the UE, the UE may use RS resource index $q_d$ having a pathloss reference RS ID of zero.

When a configured grant configuration (for example, ConfiguredGrantConfig) includes a certain parameter (for example, rrc-ConfiguredUplinkGrant) for PUSCH transmission configured by the configured grant configuration, RS resource index $q_d$ may be provided for the UE by a pathloss reference index (for example, pathlossReferenceIndex) in the certain parameter.

When the configured grant configuration does not include the certain parameter for the PUSCH transmission configured by the configured grant configuration, the UE may determine RS resource index $q_d$ on the basis of a pathloss reference RS ID value mapped to an SRI field in a DCI format for activating the PUSCH transmission. When the DCI format does not include the SRI field, the UE may determine RS resource index $q_d$ having the pathloss reference RS ID of zero.

Note that Equations (1) and (2) are only illustrative examples, and are not limited to these. It is only necessary that the UE controls transmission power for the PUSCH on the basis of at least one parameter illustrated in Equations (1) and (2), and an additional parameter may be included, or some parameters may be omitted. In Equations (1) and (2) described above, the transmission power for the PUSCH is controlled for each active UL BWP on a certain carrier of a certain serving cell, but is not limited to this. At least some of the serving cell, carrier, BWP, and power control adjustment state may be omitted.

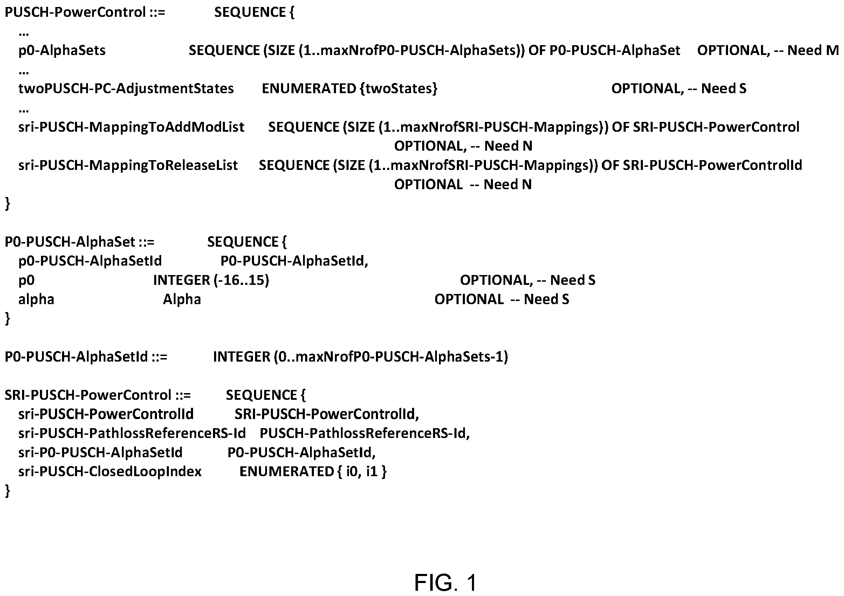

FIG. 1 is a diagram to show an example of an RRC information element related to the PUSCH transmission power control in Rel. 16. As shown in FIG. 1, the UE performs PUSCH transmission power control on the basis of the RRC information element (PUSCH-PowerControl) related to the PUSCH transmission power control. PUSCH-PowerControl is included in an RRC information element for PUSCH configuration (PUSCH-Config).

As shown in FIG. 1, PUSCH-PowerControl includes at least a parameter (p0-AlphaSets) indicating a parameter set for giving $P_{O\_PUSCH,b,f,c}$ (j) and $\alpha_{b,f,c}$ (j). p0-AlphaSets includes a parameter (P0-PUSCH-AlphaSet) for giving $P_{O\_PUSCH,b,f,c}$ (j) and $\alpha_{b,f,c}$ (j). In other words, the UE is configured with a plurality of combinations of P0 and $\alpha$ for each PUSCH configuration parameter (PUSCH-Config).

As shown in FIG. 1, P0-PUSCH-AlphaSet includes a parameter (p0-PUSCH-AlphaSetID) indicating an ID of a set of P0 and $\alpha$, a parameter (P0) related to P0, and a parameter (alpha) related to $\alpha$. On the basis of P0-PUSCH-AlphaSet, the UE is configured with a plurality of sets of P0 and $\alpha$.

PUSCH-PowerControl includes a parameter (twoPUSCH-PC-AdjustmentStates) for configuration of two transmission power control adjustment states. The UE may, when twoPUSCH-PC-AdjustmentStates is configured, determine that two power adjustment states (closed-loop power control states) are configurable.

In the example shown in FIG. 1, a power control configuration parameter (SRI-PUSCH-PowerControl) mapped to an SRI field value includes at least a configuration parameter (sri-PUSCH-ClosedLoopIndex) for a closed-loop index of a PUSCH. The power control configuration parameter (SRI-PUSCH-PowerControl) mapped to the SRI field value is identified by sri-PUSCH-PowerControlID.

The UE determines a closed-loop index value on the basis of the configuration parameter (sri-PUSCH-ClosedLoopIndex) for a closed-loop index of the PUSCH. In other words, the UE is configured with P0, $\alpha$, and closed-loop index for each sri-PUSCH-PowerControlID.

<PUSCH Open-loop Transmission Power Control>

For Rel. 16, introduction of open-loop power control capable of controlling a P0 value by using DCI is under study.

Rel-16 NR supports a case where an SRI-based PUSCH power control configuration (for example, SRI-PUSCH-PowerControl) provides, for the UE, values of IDs of a plurality of sets of P0 and $\alpha$ for a PUSCH (p0-PUSCH-AlphaSetId) and where a DCI format for scheduling the PUSCH includes an SRI field. In such a case, the UE obtains, on the basis of an SRI-based PUSCH power control ID (sri-PUSCH-PowerControlId) in the SRI-based PUSCH power control configuration (for example, SRI-PUSCH-PowerControl), mapping between a set of SRI field values in the DCI format and a set of indices to be mapped to a set of values of sets of P0 and α for the PUSCH (P0-PUSCH-AlphaSet), the set of the indices being provided by IDs of the sets of P0 and α for the PUSCH (p0-PUSCH-AlphaSetId) . Subsequently, the UE determines $P_{0\_PUSCH,b,f,c}$ (j) on the basis of a value of an ID of the set of P0 and α for the PUSCH (p0-PUSCH-AlphaSetId) mapped to the SRI field.

If the DCI format includes an indication field for an open-loop power control parameter set, and the indication field for the open-loop power control parameter set indicates 1, the UE determines $P_{O\_PUSCH,b,f,c}$ (j) on the basis of the first value of a PUSCH P0 set (p0-PUSCH-Set) with a PUSCH P0 set ID (p0-PUSCH-SetId) corresponding to a value of the SRI field.

If a PUSCH P0 set (P0-PUSCH-Set) is provided for the UE, and the DCI format includes an indication field for an open-loop power control parameter set, when the indication field for the open-loop power control parameter set indicates 1 or 01, the UE determines $P_{O\_PUSCH,b,f,c}$ (j) on the basis of the first value of a PUSCH P0 set (p0-PUSCH-Set) with the lowest PUSCH P0 set ID (p0-PUSCH-SetId, p0-PUSCH-SetId-r16).

If a PUSCH P0 set (P0-PUSCH-Set) is provided for the UE, and the DCI format includes an indication field for an open-loop power control parameter set, when the indication field for the open-loop power control parameter set indicates 10, the UE determines $P_{O\_PUSCH,b,f,c}$ (j) on the basis of the second value of a PUSCH P0 set (p0-PUSCH-Set) with the lowest PUSCH P0 set ID (p0-PUSCH-SetId, p0-PUSCH-SetId-r16).

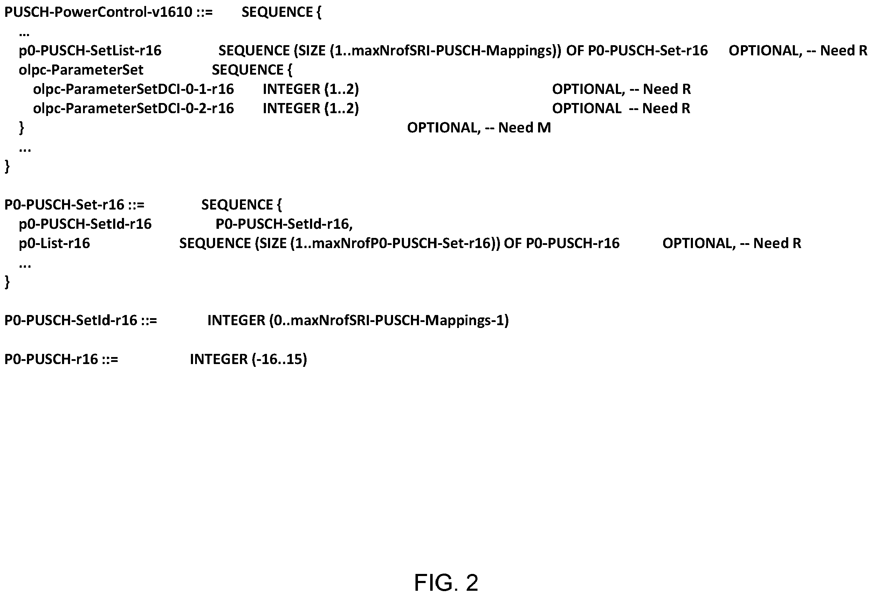

FIG. 2 is a diagram to show an example of an RRC information element related to the open loop power control in Rel. 16. In FIG. 2, a PUSCH transmission power configuration parameter (PUSCH-PowerControl-v1610) included in an RRC information element for PUSCH configuration (PUSCH-Config) is described.

In FIG. 2, the PUSCH transmission power configuration parameter (PUSCH-PowerControl-v1610) includes information related to a plurality of PUSCH P0 sets (p0-PUSCH-SetList-r16). P0-PUSCH-SetList-r16 is identified by p0-PUSCH-SetId-r16, and includes a P0 list (p0-List-r16).

As shown in FIG. 2, p0-List-r16 is configured for each p0-PUSCH-SetId-r16. p0-List-r16 corresponds to an SRI field for each value of p0-PUSCH-SetId-r16.

<PUCCH Transmission Power Control>

In NR, transmission power for a PUCCH is controlled on the basis of a TPC command (also referred to as a value, an increasing/decreasing value, a correction value, an indicated value, or the like) indicated by a value of a certain field (also referred to as a TPC command field, a first field, or the like) in DCI.

For example, by using index 1 of a power control adjustment state, transmission power for the PUCCH ($P_{PUCCH,b,f,c}$ (i, $q_u$, $q_d$, l)) in PUCCH transmission occasion (also referred to as a transmission period or the like) i for active UL BWP b on carrier f of serving cell c may be represented by Equation (3) described below.

The power control adjustment state may be referred to as a PUCCH power control adjustment state, a first or second state, or the like.

PUCCH transmission occasion i is a certain period in which the PUCCH is transmitted, and may be constituted by, for example, one or more symbols, one or more slots, or the like.

[Math. 3]

$$(\text{Equation 3})$$

$$P_{\text{PUCCH},b,f,c}(i, q_u, q_d, l) =$$

$$min \left\{ \begin{array}{l} P_{\text{CMAX},f,c}(i), \\ P_{\text{O\_PUCCH},b,f,c}(q_u) + 10\log_{10}\left(2^\mu \cdot M_{\text{RB},b,f,c}^{\text{PUCCH}}(i)\right) + PL_{b,f,c}(q_d) + \Delta_{\text{F\_PUCCH}}(F) + \Delta_{\text{TF},b,f,c}(i) + g_{b,f,c}(i, l) \end{array} \right\}$$

In Equation (3), $P_{\text{CMAX},f,c}$ (i) is, for example, transmission power (also referred to as maximum transmission power, UE maximum output power, or the like) of a user terminal configured for carrier f of serving cell c in transmission occasion i. $P_{O\_PUCCH,b,f,c}$ ($q_u$) is, for example, a parameter related to target received power configured for active UL BWP b on carrier f of serving cell c in transmission occasion i (also referred to as, for example, a parameter related to transmission power offset, transmission power offset P0, a target received power parameter, or the like).

$M^{\text{PUCCH}}_{\text{RB},b,f,c}$ (i) is, for example, the number of resource blocks (bandwidths) allocated to the PUCCH for transmission occasion i in active UL BWP b on carrier f in serving cell c and with subcarrier spacing μ. $PL_{b,f,c}$ ($q_d$) is, for example, a pathloss calculated in the user terminal by using index $q_d$ of a reference signal (pathloss reference RS, pathloss measurement DL RS, PUCCH-PathlossReferenceRS) for a downlink BWP associated with active UL BWP b on carrier f of serving cell c.

$\Delta_{F\_PUCCH}$ (F) is a higher layer parameter given for each PUCCH format. $\Delta_{TF,b,f,c}$ (i) is a transmission power adjustment component (offset) for UL BWP b on carrier f of serving cell c.

$g_{b,f,c}$ (i, 1) is a value based on a TPC command with the above-described power control adjustment state index 1 for the active UL BWP on carrier f in serving cell c and transmission occasion i (for example, a power control adjustment state, an accumulated value of the TPC command, a closed-loop value, or a PUCCH power adjustment state). For example, $g_{b,f,c}$ (i, 1) may be represented by Equation (4).

[Math. 4]

(Equation 4)

$$g_{b,f,c}(i,l) = g_{b,f,c}(i - i_0, l) + \sum_{m=0}^{C(C_i)-1} \delta_{\text{PUCCH},b,f,c}(m,l)$$

In Equation (4), $\delta_{PUCCH,b,f,c}$ (m, 1) is a TPC command value in PUCCH transmission occasion m. $\sum_{m=0}^{C(C\_i)-1}\delta_{PUCCH,b,f,c}$ (m, 1) is the sum of TPC command values in a TPC command value set of group C ($C_i$) between $K_{PUCCH}$ (i-$i_0$)-1 symbols before PUCCH transmission occasion i-$i_0$ and $K_{PUCCH}$ (i) symbols before PUCCH transmission occasion i. Here, io is an integer greater than or equal to 1. A TPC command value in a certain PUCCH transmission occasion may be a TPC command indicated by a TPC command field value in DCI (for example, DCI format 1_0 or DCI format 1_1) detected in active UL BWP b on carrier f of serving cell c, or may be a TPC command indicated by a TPC command field value in DCI (for example, DCI format 2_2) (to be CRC scrambled) having a CRC parity bit scrambled by a specific Radio Network Temporary Identifier (RNTI) (for example, TPC-PUCCH-RNTI).

If information (twoPUCCH-PC-AdjustmentStates) indicating use of two PUCCH power control adjustment states and PUCCH spatial relation information (PUCCH-SpatialRelationInfo) are provided for the UE, 1 may be equal to {0, 1}, and if the information indicating use of two PUCCH power control adjustment states or the PUCCH spatial relation information is not provided for the UE, 1 may be equal to 0.

If the UE obtains a TPC command value from DCI format 1_0 or DCI format 1_1, and the PUCCH spatial relation information is provided for the UE, the UE may obtain mapping between a PUCCH spatial relation information ID (pucch-SpatialRelationInfoId) value and a closed-loop index (closedLoopIndex or power adjustment state index 1) by using an index provided by a PUCCH P0 ID (p0-PUCCH-Id in p0-Set in PUCCH-PowerControl in PUCCH-Config). When the UE receives an activation command including a value of the PUCCH spatial relation information ID, the UE may determine, through a link to a corresponding PUCCH P0 ID, a value of the closed-loop index for providing an 1 value.

For active UL BWP b on carrier f of serving cell c, if a configuration of a $P_{O\_PUCCH,b,f,c}$ ($q_u$) value for corresponding PUCCH power adjustment state 1 is provided for the UE by a higher layer, $g_{b,f,c}$ (i, 1) = 0, and k = 0, 1, ..., i. If the PUCCH spatial relation information is provided for the UE, the UE may determine, on the basis of the PUCCH spatial relation information associated with a PUCCH P0 ID corresponding to $q_u$ and a closed-loop index value corresponding to 1, the 1 value based on the $q_u$ value.

$q_u$ may be a PUCCH P0 ID (p0-PUCCH-Id) indicating PUCCH P0 (P0-PUCCH) in PUCCH P0 set (p0-Set).

Note that Equations (3) and (4) are only illustrative examples, and are not limited to these. It is only necessary that the user terminal controls transmission power for the PUCCH on the basis of at least one parameter illustrated in Equations (3) and (4), and an additional parameter may be included, or some parameters may be omitted. In Equations (3) and (4) described above, the transmission power for the PUCCH is controlled for each active UL BWP on a certain carrier of a certain serving cell, but is not limited to this. At least some of the serving cell, carrier, BWP, and power control adjustment state may be omitted.

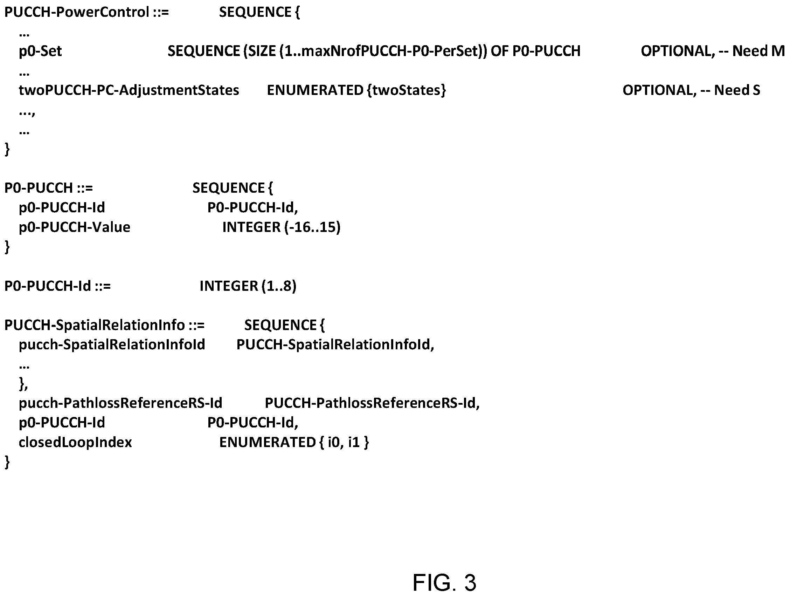

FIG. 3 is a diagram to show an example of an RRC information element for the PUCCH transmission power control in Rel. 16. As shown in FIG. 3, the UE performs PUCCH transmission power control on the basis of the RRC information element (PUCCH-PowerControl) related to the PUCCH transmission power control. PUCCH-PowerControl is included in an RRC information element for PUCCH configuration (PUCCH-Config).

As shown in FIG. 3, PUCCH-PowerControl includes at least a parameter (p0-Set) indicating a parameter set for giving $P_{O\_PUCCH,b,f,c}$ ($q_u$). p0-Set includes parameters (P0-PUCCH) for giving $P_{O\_PUCCH,b,f,c}$ (j) .

As shown in FIG. 3, P0-PUCCH includes a parameter (p0-PUCCH-Id) indicating a PUCCH P0 ID and a parameter (p0-PUCCH-Value) related to a PUCCH P0 value. On the basis of p0-Set, the UE is configured with a plurality of P0 sets. In other words, the UE is configured with a plurality of PCs for each PUCCH configuration parameter (PUCCH-Config).

PUCCH-PowerControl includes a parameter (twoPUCCH-PC-AdjustmentStates) for configuration of two transmission power control adjustment states. The UE may, when twoPUCCH-PC-AdjustmentStates is configured, determine that two power adjustment states (closed-loop power control states) are configurable.

As shown in the example shown in FIG. 3, the UE is configured with a parameter related to PUCCH spatial relation information (PUCCH-SpatialRelationInfo). The parameter related to PUCCH spatial relation information (PUCCH-SpatialRelationInfo) is identified by a PUCCH spatial relation information ID (pucch-SpatialRelationInfoId). The parameter related to PUCCH spatial relation information (PUCCH-SpatialRelationInfo) includes at least a parameter (p0-PUCCH-Id) indicating a PUCCH P0 ID and a closed-loop index configuration parameter (closedLoopIndex). In other words, in the PUCCH transmission power control, P0 and closed-loop index are configured for each PUCCH spatial relation.

<SRS Transmission Power Control>

For example, by using index 1 of a power control adjustment state, transmission power for the SRS ($P_{SRS,b,f,c}$ (i, $q_s$, l)) in SRS transmission occasion (also referred to as a transmission period or the like) i for active UL BWP b on carrier f of serving cell c may be represented by Equation (5) described below.

The power control adjustment state may be referred to as an SRS power control adjustment state, a value based on a TPC command, an accumulated value of a TPC command, a closed-loop value, a first or second state, or the like. 1 may be referred to as a closed-loop index.

SRS transmission occasion i is a certain period in which the SRS is transmitted, and may be constituted by, for example, one or more symbols, one or more slots, or the like.

[Math. 5]

$$(\text{Equation 5})$$

$$P_{SRS,b,f,c}(i, q_s, l) =$$

$$min \left\{ \begin{array}{l} P_{CMAX,f,c}(i), \\ P_{O\_SRS,b,f,c}(q_s) + 10\log_{10}\left(2^{\mu} \cdot M_{SRS,b,f,c}(i)\right) + \alpha_{SRS,b,f,c}(q_s) \cdot PL_{b,f,c}(q_d) + h_{b,f,c}(i,l) \end{array} \right\}$$

In Equation (5), $P_{CMAX,f,c}$ (i) is, for example, UE maximum output power for carrier f of serving cell c in SRS transmission occasion i. $P_{O\_SRS,b,\varepsilon,c}$ ($q_s$) is a parameter related to target received power (also referred to as, for example, a parameter related to transmission power offset, transmission power offset P0, a target received power parameter, or the like) provided by p0 for active UL BWP b on carrier f of serving cell c and SRS resource set $q_s$ (provided by SRS-ResourceSet and SRS-ResourceSetId).

$M_{SRS,b,f,c}$ (i) is an SRS bandwidth represented by the number of resource blocks for SRS transmission occasion i on active UL BWP b on carrier f in serving cell c and with subcarrier spacing μ.

$\alpha_{SRS,b,f,c}$ ($q_s$) is provided by α (for example, alpha) for active UL BWP b on carrier f in serving cell c and with subcarrier spacing μ, and for SRS resource set $q_s$.

$PL_{b,f,c}$ ($q_d$) is a DL path loss estimation value [dB] calculated by the UE using RS resource index $q_d$ for an active DL BWP in serving cell c and SRS resource set $q_s$. RS resource index $q_d$ is a path loss reference RS (path loss measurement DL RS, provided by, for example, pathlossReferenceRS) associated with SRS resource set $q_s$, and is an SS/PBCH block index (for example, ssb-Index) or a CSI-RS resource index (for example, csi-RS-Index).

$h_{b,f,c}$ (i, 1) is an SRS power control adjustment state for the active UL BWP on carrier f of serving cell c, and SRS transmission occasion i. When a configuration of the SRS power control adjustment state (for example, srs-PowerControlAdjustmentStates) indicates the same power control adjustment state for SRS transmission and PUSCH transmission, $h_{b,f,c}$ (i, 1) is current PUSCH power control adjustment state $f_{b,f,c}$ (i, 1). On the other hand, when the configuration of the SRS power control adjustment state indicates independent power control adjustment states for SRS transmission and PUSCH transmission, and a TPC accumulation configuration is not provided, SRS power control adjustment state $h_{b,f,c}$ (i) may be represented by Equation (6).

[Math. 6]

$$(\text{Equation 6})$$

$$h_{b,f,c}(i,l) = h_{b,f,c}(i - i_0) + \sum_{m=0}^{c(S_i)-1} \delta_{SRS,b,f,c}(m)$$

In Equation (6), $\delta_{SRS,b,f,c}$ (m) is coded in a PDCCH having DCI (for example, DCI format 2_3), together with

another TPC command. $\delta_{SRS,b,f,c}$ (m) is a TPC command value in SRS transmission occasion m. $\Sigma^{C(S\_i)-1}_{m=0}\delta_{SRS,b,f,c}$ (m) is the sum of TPC command values in a TPC command value set of group C ($S_i$) between $K_{SRS}$ (i-$i_0$)-1 symbols before SRS transmission occasion i-$i_0$ and $K_{SRS}$ (i) symbols before SRS transmission occasion i, on active UL BWP b on carrier f in serving cell c and with subcarrier spacing $\mu$. Here, io is an integer greater than or equal to 1.

Note that Equations (5) and (6) are only illustrative examples, and are not limited to these. It is only necessary that the user terminal controls transmission power for the SRS on the basis of at least one parameter illustrated in Equations (5) and (6), and an additional parameter may be included, or some parameters may be omitted. In Equations (5) and (6) described above, the transmission power for the SRS is controlled for each BWP on a certain carrier of a certain cell, but is not limited to this. At least some of the cell, carrier, BWP, and power control adjustment state may be omitted.

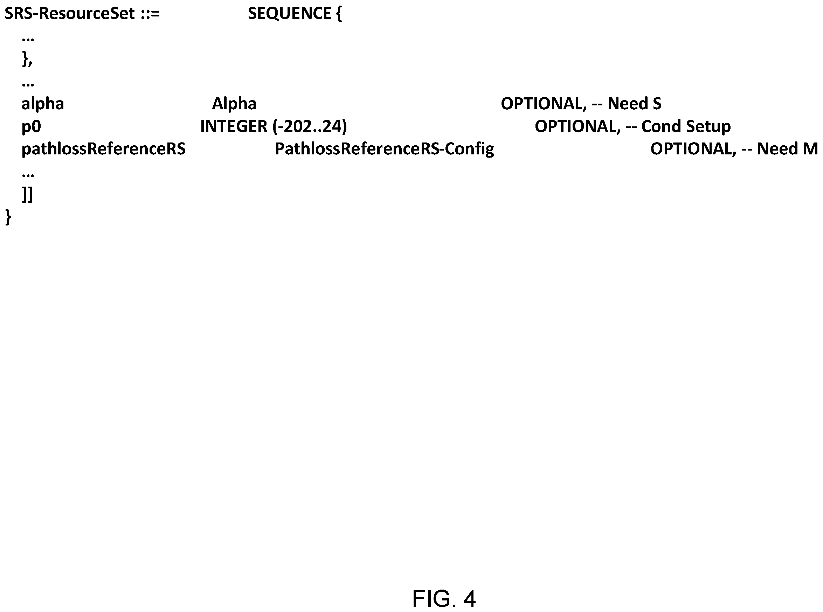

FIG. 4 is a diagram to show an example of an RRC information element for the SRS transmission power control in Rel. 16. As shown in FIG. 4, the UE performs SRS transmission power control on the basis of information included in an RRC information element related to SRS resource set configuration (SRS-ResourceSet).

As shown in FIG. 4, SRS-ResourceSet includes at least a parameter (P0) related to $P_{O\_SRS,b,f,c}$ ($q_s$) and a parameter (alpha) related to $\alpha_{SRS,b,f,c}$ ($q_s$). In other words, the UE is configured with one P0 and $\alpha$ for each SRS resource set.

(Indication of Power Control Configuration)

Rel-15 NR can perform, in order to track spatial relation change, switching between a plurality of states of an open-loop (OL)-TPC or a closed-loop (CL)-TPC by using an SRI field in DCI. When usage of the SRS resource set is codebook transmission (codebook), a maximum number of SRI field values is 2 (SRI field length is 1 bit), and when the usage of the SRS resource set is non-codebook transmission (nonCodebook), the maximum number of SRI field values is 4 (SRI field length is 2 bits).

In order to configure a power control configuration for a PUSCH, PUSCH power control information (PUSCH-PowerControl) in PUSCH configuration information (PUSCH-Config) includes a list (sri-PUSCH-MappingToAddModList) of power control configurations (SRI-PUSCH-PowerControl) mapped to SRI field values. The power control configuration includes a power control configuration ID (sri-PUSCH-PowerControlId) corresponding to an SRI field value, a pathloss reference RS ID (sri-PUSCH-PathlossReferenceRS-Id) indicating a pathloss reference RS, a P0-$\alpha$ set ID (sri-P0-PUSCH-AlphaSetId) indicating a set of P0 and $\alpha$, and a closed-loop (CL) ID (sri-PUSCH-ClosedLoopIndex) corresponding to power control state 1.

At least one of the pathloss reference RS ID, the P0-$\alpha$ set ID, and the closed-loop ID may be referred to as a power control (transmission power control, TPC) parameter. At least one of the pathloss reference RS ID and the P0-$\alpha$ set ID is used for open-loop (OL) power control, and thus may be referred to as an OL power control (TPC) parameter. The closed-loop ID is used for closed-loop (CL) power control, and thus may be referred to as a CL power control (TPC) parameter.

For example, power control configuration #0 including P0 #0, $\alpha$ #0, pathloss reference RS #0, and power control adjustment state #0 (1 = 0) may be associated with SRI field value 0, and power control configuration #1 including P0 #1, $\alpha$ #1, pathloss reference RS #1, and power control adjustment state #1 (1 = 1) may be associated with SRI field value 1. The SRI field indicates the associated power control configuration for the UE.

When the UE is configured with only one SRS resource, the SRI field length is 0 bit.

In order to configure a power control configuration for a PUCCH, PUCCH configuration information (PUCCH-Config) includes a power control configuration (PUCCH-PowerControl). The power control configuration includes a correction value $\Delta_{F\_PUCCH}$ (F) per PUCCH format (deltaF-PUCCH-f0, deltaF-PUCCH-f1, deltaF-PUCCH-f2, deltaF-PUCCH-f3, deltaF-PUCCH-f4), a P0 set (p0-Set), a set of pathloss reference RSs (pathlossReferenceRSs), and information indicating whether to use two PUCCH power adjustment states (twoPUCCH-PC-AdjustmentStates). The pathloss reference RS may be indicated by an SSB index (SSB-Index) or a CSI-RS (NZP-CSI-RS resource ID (NZP-CSI-RS-ResourceId)).

Thus, Rel-15 NR can switch between power control configurations.

(Multi-TRP)

For NR, it is studied that one or a plurality of transmission/reception points (TRPs) (multi-TRP (multi TRP (MTRP))) perform DL transmission to a UE by using one or a plurality of panels (multi-panel). It is also studied that the UE performs UL transmission to the one or plurality of TRPs by using one or a plurality of panels.

Note that the plurality of TRPs may correspond to the same cell identifier (ID) or may correspond to different cell IDs. The cell ID may be a physical cell ID or a virtual cell ID.

The multi-TRP (for example, TRPs #1 and #2) may be connected via ideal/non-ideal backhaul to exchange information, data, and the like. Each TRP of the multi-TRP may transmit a different codeword (Code Word (CW)) and a different layer. As one mode of multi-TRP transmission, non-coherent joint transmission (NCJT) may be employed.

In NCJT, for example, TRP #1 performs modulation mapping on a first codeword, performs layer mapping, and transmits a first PDSCH in layers of a first number (for example, two layers) by using first precoding. TRP #2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI, single PDCCH) (single master mode, multi-TRP based on single DCI (single-DCI based multi-TRP)). The plurality of PDSCHs from the multi-TRP may be separately scheduled by using a plurality of pieces of DCI (multi-DCI, multi-PDCCH (multiple PDCCHs)) (multi-master mode, multi-TRP based on multi-DCI (multi-DCI based multi-TRP)).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a channel with high quality is possible.

To support intra-cell (with the same cell ID) and inter-cell (with different cell IDs) multi-TRP transmission based on a plurality of PDCCHs, one control resource set (CORESET) in PDCCH configuration information (PDCCH-Config) may correspond to one TRP in RRC configuration information for linking a plurality of pairs of a PDCCH and a PDSCH with a plurality of TRPs.

When at least one of conditions 1 and 2 below is satisfied, the UE may determine that it is multi-TRP based on multi-DCI. In this case, a TRP may be interpreted as a CORESET pool index.

{Condition 1}

One CORESET pool index is configured.

{Condition 2}

Two different values (for example 0 and 1) of a CORESET pool index are configured.

When the following condition is satisfied, the UE may determine that it is multi-TRP based on single DCI. In this case, two TRPs may be interpreted as two TCI states indicated by a MAC CE/DCI.

{Condition}

To indicate one or two TCI states for one codepoint of a TCI field in DCI, an "enhanced TCI states activation/deactivation for UE-specific PDSCH MAC CE" is used.

DCI for common beam indication may be a UE-specific DCI format (for example, DL DCI format (for example, 1_1, 1_2)), may be a UL DCI format (for example, 0_1, 0_2), or may be a UE-group common DCI format.

(Simultaneous Beam Update of Plurality of CCs)

In Rel. 16, one MAC CE can update beam indices (TCI states) of a plurality of CCs.

The UE can be configured with up to two applicable CC lists (for example, applicable-CC-list) by RRC. When two applicable CC lists are configured, the two applicable CC lists may correspond to inter-band CA in FR1 and inter-band CA in FR2.

An activation MAC CE for a TCI state of a PDCCH activates TCI states associated with the same CORESET ID in all the BWPs/CCs in an applicable CC list.

An activation MAC CE for a TCI state of a PDSCH activates TCI states in all the BWPs/CCs in the applicable CC list.

An activation MAC CE for a spatial relation of an A-SRS/SP-SRS activates spatial relations associated with the same SRS resource ID in all the BWPs/CCs in the applicable CC list.

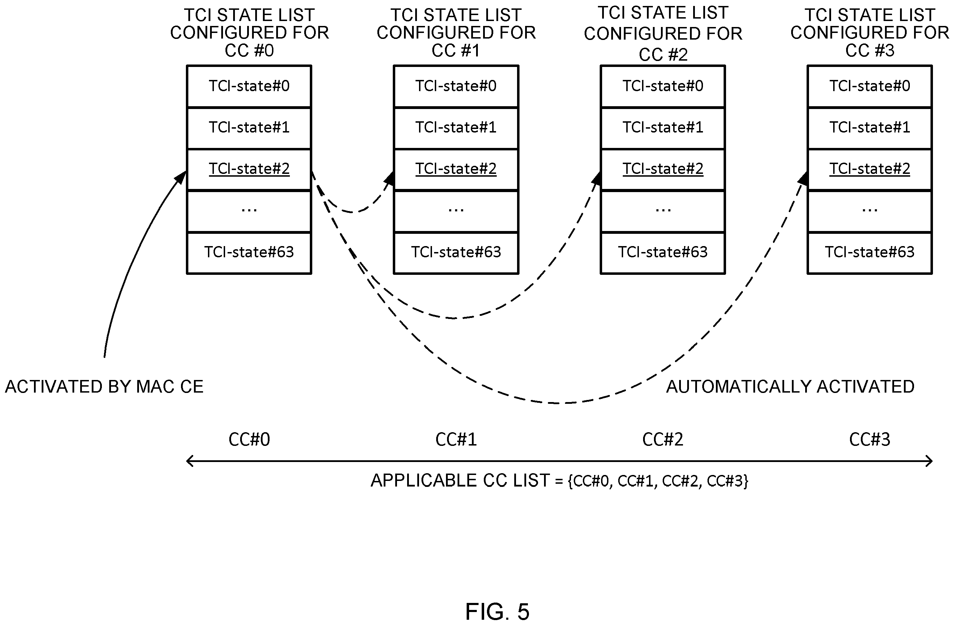

In an example in FIG. 5, the UE is configured with an applicable CC list indicating CCs #0, #1, #2, and #3 and a list indicating 64 TCI states for a CORESET or a PDSCH in each of the CCs. When one TCI state in CC #0 is activated by a MAC CE, corresponding TCI states are activated in CCs #1, #2, and #3.

It is studied that such simultaneous beam update is applicable only to a single-TRP case.

For a PDSCH, the UE may be based on Procedure A below.

{Procedure A}

The UE receives an activation command for mapping up to eight TCI states to a codepoint in a DCI field (TCI field) in one CC / DL BWP or in one set of CCs/BWPs. When one set of TCI state IDs is activated for one set of CCs / DL BWPs, an applicable CC list is determined by a CC(s) indicated in an activation command, and a set of TCI states being the same is applied to all the DL BWPs in the indicated CC. Only if the UE is not provided with a plurality of different values of CORESET pool indices (CORESETPoolIndex) in a CORESET information element (ControlResourceSet) and is not provided with at least one TCI codepoint mapped to two TCI states, the one set of TCI state IDs can be activated for one set of CCs / DL BWPs.

For a PDCCH, the UE may be based on Procedure B below.

{Procedure B}

If the UE is provided with up to two lists of cells for simultaneous TCI state activation by a simultaneous TCI update list (at least one of simultaneousTCI-UpdateList-r16 and simultaneousTCI-UpdateListSecond-r16), by a simultaneous TCI cell list (simultaneousTCI-CellList), the UE applies, to CORESETs with an index p in all the configured DL BWPs in all the configured cells in one list determined based on a serving cell index provided by a MAC CE command, an antenna port quasi co-location (QCL) provided by TCI states with the same activated TCI state ID value. Only if the UE is not provided with a plurality of different values of CORESET pool indices (CORESETPoolIndex) in a CORESET information element (ControlResourceSet) and is not provided with at least one TCI codepoint mapped to two TCI states, the UE can be provided with a simultaneous TCI cell list for simultaneous TCI state activation.

For a semi-persistent (SP) / aperiodic (AP)-SRS, the UE may be based on Procedure C below.

{Procedure C}

When an SP configured by an SRS resource information element (higher layer parameter SRS-Resource) or spatial relation information (spatialRelationInfo) for an AP-SRS resource is activated/updated by a MAC CE for one set of CCs/BWPs, an applicable CC list is indicated by a simultaneous spatial update list (higher layer parameter simultaneousSpatial-UpdateList-r16 or simultaneousSpatial-UpdateListSecond-r16), and the spatial relation information is applied to SPs or AP-SRS resources with the same SRS resource ID in all the BWPs in the indicated CC. Only if the UE is not provided with a plurality of different values of CORESET pool indices (CORESETPoolIndex) in a CORESET information element (ControlResourceSet) and is not provided with at least one TCI codepoint mapped to two TCI states, the SP configured by the SRS resource information element (higher layer parameter SRS-Resource) or spatial relation information (spatialRelationInfo) for the AP-SRS resource is activated/updated by an MAC CE for the one set of CCs/BWPs.

The simultaneous TCI cell list (simultaneousTCI-CellList) and simultaneous TCI update lists (at least one of simultaneousTCI-UpdateList1-r16 and simultaneousTCI-UpdateList2-r16) are lists of serving cells for which a TCI relationship can be updated simultaneously by using a MAC CE. simultaneousTCI-UpdateList1-r16 and simultaneousTCI-UpdateList2-r16 do not include the same serving cell.

The simultaneous spatial update list (at least one of higher layer parameters simultaneousSpatial-UpdatedList1-r16 and simultaneousSpatial-UpdatedList2-r16) is a list of serving cells for which a spatial relationship can be updated simultaneously by using a MAC CE. simultaneousSpatial-UpdatedList1-r16 and simultaneousSpatial-UpdatedList2-r16 do not include the same serving cell.

Here, the simultaneous TCI update lists and the simultaneous spatial update lists are configured by RRC, a CORESET pool index of a CORESET is configured by RRC, and a TCI codepoint mapped to TCI state(s) is indicated by a MAC CE.

(Unified/common TCI Framework)

With a unified TCI framework, UL and DL channels can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam / unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number $N$ ($\geq 1$) of TCI states (UL TCI states) applied to a UL channel/RS and the number $M$ ($\geq 1$) of TCI states (DL TCI states) applied to a DL channel/RS may be defined. At least one of N and M may be notified/configured/indicated for the UE via higher layer signaling/physical layer signaling.

In the present disclosure, description "N = M = X (X is an arbitrary integer)" may mean that X TCI states (joint TCI states) (corresponding to X TRPs) common to UL and DL are notified/configured/indicated for the UE. Also, description "N = X (X is an arbitrary integer), M = Y (Y is an arbitrary integer, Y may be equal to X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above-described examples, cases where N and M values are 1 or 2 are described, but the N and M values may be 3 or more, and N and M may be different from each other.

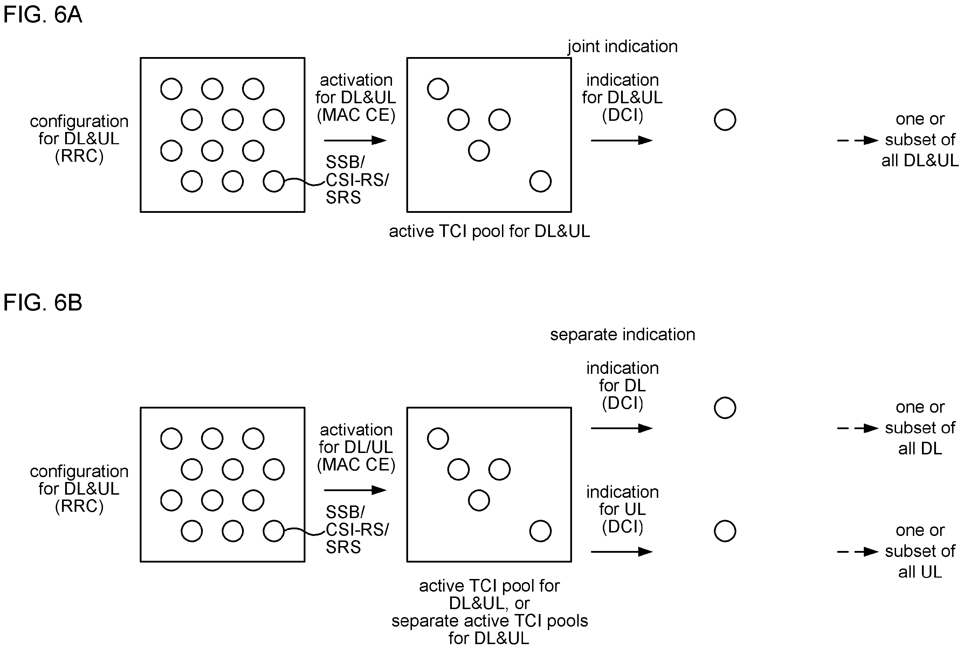

In an example in FIG. 6A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 6A, one dot may be one TCI state applied to both UL and DL, or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In an example in FIG. 6B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

Existing DCI format 1_1/1_2 may be used for indication of a common TCI state.

A common TCI framework may include separate TCI states for DL and UL.

(Analysis)

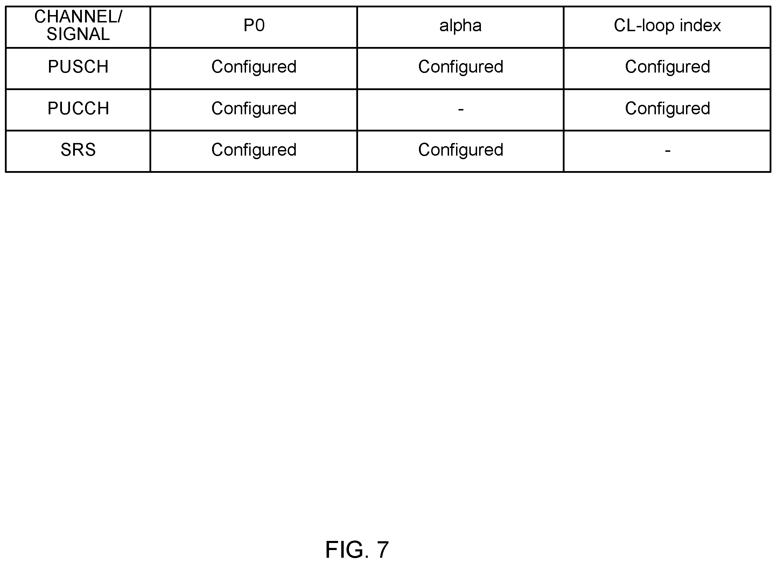

For transmission power control for a PUSCH, PUCCH, and SRS in Rel. 15/16, configured parameters are such parameters as those shown in FIG. 7.

Specifically, for PUSCH transmission power control in Rel. 15/16, P0, $\alpha$, and closed-loop index (CL-loop index) are configured.

For PUCCH transmission power control in Rel. 15/16, P0 and closed-loop index are configured.

For SRS transmission power control in Rel. 15/16, P0 and $\alpha$ are configured.

For Rel. 17 (or later versions), it is studied that a PL-RS is defined to be included in / related to a UL TCI state or a joint TCI state.

For Rel. 17 (or later versions), it is studied that a TPC-related parameter other than the PL-RS (for example, P0, $\alpha$, and closed-loop index) is defined to be related to a UL TCI state or a joint TCI state.

More specifically, it is studied that a combination (setting) of P0, $\alpha$, and closed-loop index is defined to be configured/indicated for each PUSCH/PUCCH/SRS and for each UL TCI state / joint TCI state.

However, a study of a method for configuring/indicating each parameter in a case where the defining is performed is insufficient. A method for configuration/indication related to open-loop transmission power control (OLPC) accompanied by the defining is also insufficient. Unless these studies are sufficient, appropriate transmission power control fails, and communication quality, throughput, and the like may deteriorate.

Thus, the inventors of the present invention came up with the idea of transmission power control for a UL channel/signal in a case where a TCI state applicable to a plurality of channels/signals is used.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interchangeably interpreted.

In the present disclosure, a pool, a set, a group, a list, and candidates may be interchangeably interpreted.

In the present disclosure, a DMRS, a DMRS port, and an antenna port may be interchangeably interpreted.

In the present disclosure, a special cell, an SpCell, a PCell, and a PSCell may be interchangeably interpreted.

In the present disclosure, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state / QCL assumption, an RS of QCL type A in a TCI state / QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a common beam, a common TCI, a common TCI state, a unified TCI, a unified TCI state, a TCI state applicable to DL and UL, a TCI state applied to a plurality of (plurality of types of) channels/RSs, a TCI state applicable to a plurality of types of channels/RSs, a PL-RS, and a TCI state may be interchangeably interpreted.

In the present disclosure, a plurality of TCI states configured by RRC, a plurality of TCI states activated by a MAC CE, a pool, a TCI state pool, an active TCI state pool, a common TCI state pool, a joint TCI state pool, a separate TCI state pool, a common TCI state pool for UL, a common TCI state pool for DL, a common TCI state pool configured/activated by RRC / MAC CE, and TCI state information may be interchangeably interpreted.

In the present disclosure, a panel, an Uplink (UL) transmission entity, a TRP, a spatial relation, a control resource set (CORESET), a PDSCH, a codeword, a base station, an antenna port for a certain signal (for example, a demodulation reference signal (DMRS) port), an antenna port group for a certain signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (MIMO layer, transmission layer, spatial layer) may be interchangeably interpreted. A panel Identifier (ID) and a panel may be interchangeably interpreted. In the present disclosure, a TRP ID, a TRP-related ID, a CORESET pool index, a location of one TCI state out of two TCI states corresponding to one codepoint of a field in DCI (ordinal number, first TCI state or second TCI state), and a TRP may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, a single TRP, a single-TRP system, single-TRP transmission, and a single PDSCH may be interchangeably interpreted. In the present disclosure, multi-TRP, multi-TRP system, multi-TRP transmission, and multi-PDSCH may be interchangeably interpreted. In the present disclosure, single DCI, a single PDCCH, multi-TRP based on single DCI, and two TCI states in at least one TCI codepoint being activated may be interchangeably interpreted.

In the present disclosure, a single TRP, a channel using a single TRP, a channel using one TCI state / spatial relation, multi-TRP being not enabled by RRC/DCI, a plurality of TCI states / spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel using multi-TRP, a channel using a plurality of TCI states / spatial relations, multi-TRP being enabled by RRC/DCI, a plurality of TCI states / spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

In the present disclosure, TRP #1 (first TRP) may correspond to CORESET pool index = 0, or may correspond to a first TCI state out of two TCI states corresponding to one codepoint of a TCI field. TRP #2 (second TRP) may correspond to CORESET pool index = 1, or may correspond to a second TCI state out of the two TCI states corresponding to one codepoint of the TCI field.

In the present disclosure, a cell, a serving cell, a CC, a BWP, a BWP in a CC, and a band may be interchangeably interpreted.

(Radio Communication Method)

In the present disclosure, a DL TCI, a DL-only TCI, a separate DL-only TCI, a DL common TCI, a DL unified TCI, a common TCI, and a unified TCI may be interchangeably interpreted. In the present disclosure, a UL TCI, a UL-only TCI, a separate UL-only TCI, a UL common TCI, a UL unified TCI, a common TCI, and a unified TCI may be interchangeably interpreted.

In the present disclosure, configuration/indication/update of a separate TCI state, configuration/indication of a DL-only TCI state, configuration/indication/update of a UL-only TCI state, and configuration/indication/update of DL and UL TCI states may be interchangeably interpreted.

In the present disclosure, a case of a joint TCI pool and a case where a joint TCI pool is configured may be interchangeably interpreted. In the present disclosure, a case of a separate TCI pool and a case where a separate TCI pool is configured may be interchangeably interpreted.

In the present disclosure, a case where a joint TCI pool is configured, a case where a TCI pool configured for DL and a TCI pool configured for UL are in common, a case where a TCI pool for both DL and UL is configured, and a case where one TCI pool (one set of TCIs) is configured may be interchangeably interpreted.

In the present disclosure, a case where separate TCI pools are configured, a case where a TCI pool configured for DL and a TCI pool configured for UL are different from each other, a case where a TCI pool for DL (first TCI pool, first TCI set) and a TCI pool for UL (second TCI pool, second TCI set) are configured, a case where a plurality of TCI pools (plurality of sets of TCIs) are configured, and a case where a TCI pool for DL is configured may be interchangeably interpreted. When a TCI pool for DL is configured, a TCI pool for UL may be equal to the configured TCI pool.

In the present disclosure, a channel/RS to which a common TCI is applied may be a PDSCH / PDCCH / HARQ-ACK information / PUCCH / PUSCH / CSI-RS / SRS.

In each embodiment of the present disclosure, a pool (list) including a plurality of unified TCI states may be configured/activated, and one or more TCI states of the plurality of unified TCI states may be indicated, for the UE. The configuration/activation may be performed by configuration information transmitted via higher layer signaling (for example, RRC signaling / MAC CE). The indication may be performed by indication information transmitted by using DCI.

Note that, in the present disclosure, a signaling structure, signaling, a configuration, a structure, configuration information, an information element, indication, indication information, a list, a pool, and the like may be interchangeably interpreted.

In the present disclosure, a UL channel/signal, UL channel/signal transmission, and UL transmission may be interchangeably interpreted.

<First Embodiment>

In a first embodiment, a set of parameters related to a common TPC (which may be referred to as TPC parameters) may be configured for a UE for each TCI state over a plurality of UL channels/signals, and a component depending on each channel/signal may be applied to the UE.

The plurality of UL channels/signals may be, for example, PUSCHs/PUCCHs/SRSs.

The TPC parameter may be at least one of a parameter related to P0 (which may be simply referred to as "P0"), a parameter related to $\alpha$ (which may be simply referred to as "$\alpha$"), and a parameter related to a closed-loop index (which may be simply referred to as a "CL-loop index").

<<Embodiment 1-1>>

The UE may be configured with a plurality of sets of a plurality of TPC parameters (hereinafter, which may be simply referred to as "sets"). For example, the sets may include a combination of parameters related to P0 / parameters related to $\alpha$ / parameters related to closed-loop indices.

The configuration may be performed by using higher layer signaling (for example, RRC signaling / MAC CE). In each embodiment of the present disclosure below, a case where RRC signaling is used will be mainly described, but a MAC CE may be appropriately used.

The sets may be sets common to a plurality of UL channels/signals. The sets may be identified by an ID.

An ID of the sets may be related to each TCI state. The sets may be configured/applied for each TCI state.

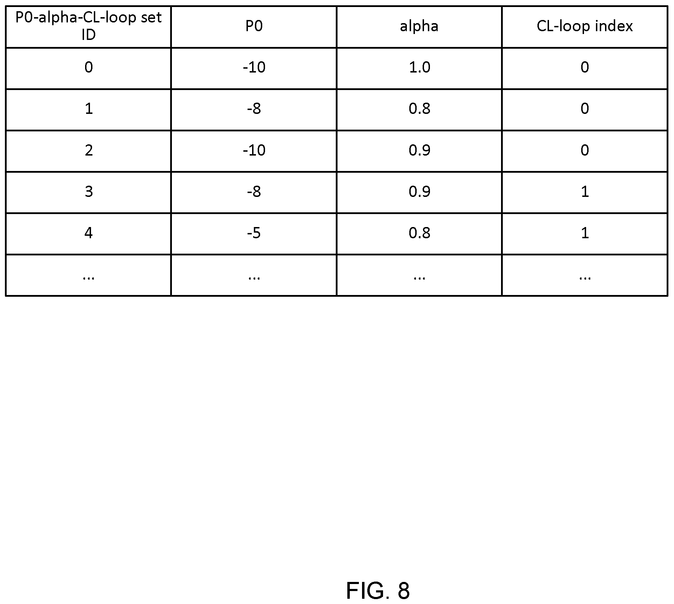

FIG. 8 is a diagram to show an example of the set of a plurality of TPC parameters according to Embodiment 1-1. In the example shown in FIG. 8, a plurality of sets of P0, $\alpha$ (alpha), and CL-loop index are configured for the UE. One of the sets is identified by a P0-alpha-CL-loop set ID.

Note that the name of each parameter shown in each embodiment of the present disclosure is only an example, and is not limited to that illustrated.

The UE may be configured with one set of a plurality of TPC parameters corresponding to one TCI state (Embodiment 1-1-1). In other words, the UE may be configured with an ID of the one set corresponding to one TCI state. The UE may apply the one set to a plurality of UL channels/signals corresponding to the one TCI state.

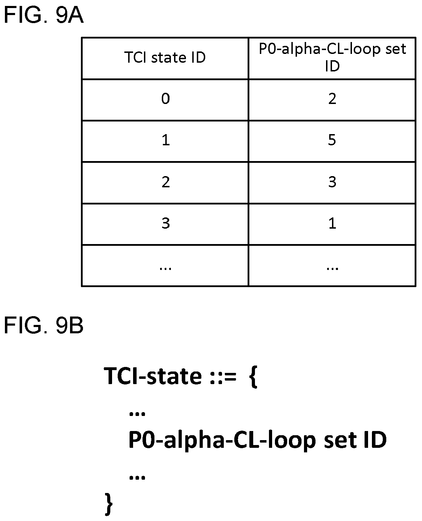

FIG. 9A is a diagram to show an example of a method for configuring the set of a plurality of TPC parameters according to Embodiment 1-1-1. The UE is configured with such a plurality of sets as those described in FIG. 8. Subsequently, the UE is configured with the set (ID of the set, P0-alpha-CL-loop set ID) corresponding to the TCI state (TCI state ID). The UE determines a TPC parameter per TCI state on the basis of such correspondence as that described in FIG. 9A.

FIG. 9B is a diagram to show an example of an information element related to the TPC parameter according to Embodiment 1-1-1. As shown in FIG. 9B, a TCI state configuration parameter (TCI-state) may include a P0-alpha-CL-loop set ID.

The TCI state configuration parameter (TCI-state) may not include the P0-alpha-CL-loop set ID. In this case, the TCI state configuration parameter (TCI-state) and the P0-alpha-CL-loop set ID may be associated with each other through a specific parameter.

According to Embodiment 1-1-1, it is possible to perform configuration of a plurality of TPC parameters for the UE while suppressing an increase in signaling overhead.

The UE may be configured with a plurality of IDs of sets corresponding to a plurality of respective UL channels/signals, the sets corresponding to one TCI state (Embodiment 1-1-2).

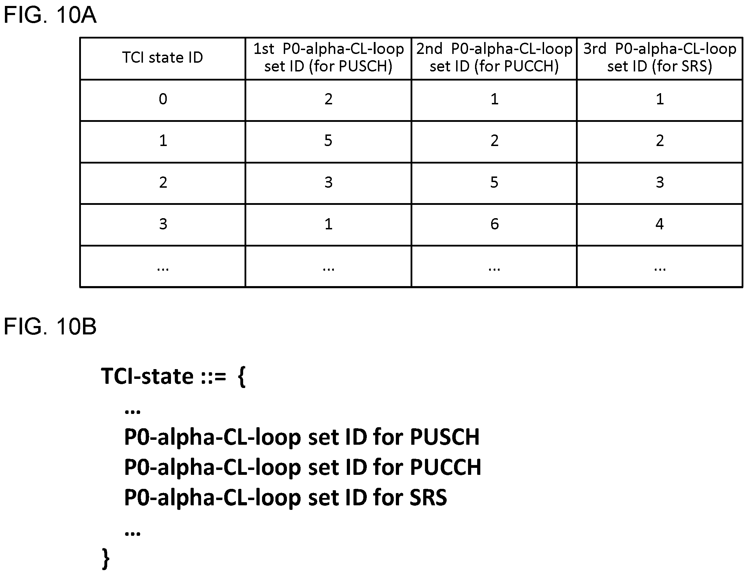

FIG. 10A is a diagram to show an example of a method for configuring the set of a plurality of TPC parameters according to Embodiment 1-1-2. The UE is configured with such a plurality of sets as those described in FIG. 8. Subsequently, the UE is configured with a set corresponding to the TCI state (TCI state ID) (ID of the set, P0-alpha-CL-loop set ID), the set corresponding to each UL channel/signal (PUSCH/PUCCH/SRS). The UE determines a TPC parameter per TCI state for each UL channel/signal on the basis of such correspondence as that described in FIG. 10A.

FIG. 10B is a diagram to show an example of an information element related to the TPC parameter according to Embodiment 1-1-2. As shown in FIG. 10B, a TCI state configuration parameter (TCI-state) may include a P0-alpha-CL-loop set ID for the PUSCH (P0-alpha-CL-loop set ID for PUSCH), a P0-alpha-CL-loop set ID for the PUCCH (P0-alpha-CL-loop set ID for PUCCH), and a P0-alpha-CL-loop set ID for the SRS (P0-alpha-CL-loop set ID for SRS).

The TCI state configuration parameter (TCI-state) may not include the P0-alpha-CL-loop set ID for the PUSCH / P0-alpha-CL-loop set ID for the PUCCH / P0-alpha-CL-loop set ID for the SRS. In this case, the TCI state configuration parameter (TCI-state) and the PO-alpha-CL-loop set ID for the PUSCH / P0-alpha-CL-loop set ID for the PUCCH / P0-alpha-CL-loop set ID for the SRS may be associated with each other through a specific parameter.

According to Embodiment 1-1-2, different transmission power control for each of different UL channels/signals is performed, but it is possible to configure almost the same transmission power for each of the different UL channels/signals.

<<Embodiment 1-2>>

When one set ID is configured for a plurality of channels/signals, the UE may determine/select at least one parameter for computing a TPC to be applied to a UL channel/signal.

The UE may determine, on the basis of (type of) the UL channel/signal, to use / not to use (ignore) a specific parameter.

For example, when one set ID is configured, and P0, $\alpha$, and CL-loop index corresponding to the ID are configured, the UE may use the configured P0, $\alpha$, and CL-loop index in order to compute a PUSCH TPC.

For example, when one set ID is configured, and P0, $\alpha$, and CL-loop index corresponding to the ID are configured, the UE may use the configured P0 and CL-loop index in order to compute a PUCCH TPC. In this case, the UE may determine that (ignore) the configured $\alpha$ is not used.

For example, when one set ID is configured, and P0, $\alpha$, and CL-loop index corresponding to the ID are configured, the UE may use the configured P0 and $\alpha$ in order to compute an SRS TPC. In this case, the UE may determine that (ignore) the configured CL-loop index is not used.

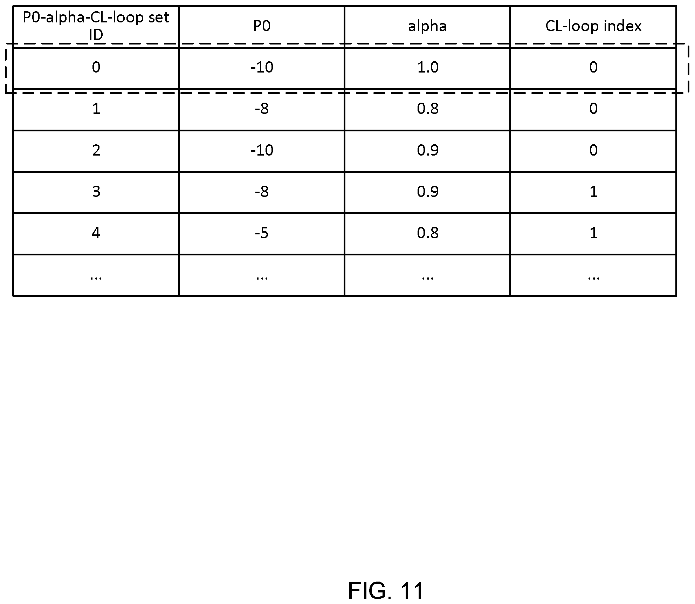

FIG. 11 is a diagram to show an example of application of the TPC parameter according to Embodiment 1-2. Correspondence shown in FIG. 11 is equal to correspondence shown in FIG. 8. The UE is configured with the correspondence, and is configured with P0-alpha-CL-loop set ID = 0 as a set ID (P0-alpha-CL-loop set ID) corresponding to a certain TCI state.

In this case, the UE applies, to computation of the PUSCH TPC, P0 = -10, alpha = 1.0, and CL-loop index = 0 corresponding to P0-alpha-CL-loop set ID = 0.

In this case, the UE applies, to computation of the PUCCH TPC, P0 = -10 and CL-loop index = 0 corresponding to P0-alpha-CL-loop set ID = 0, and ignores a value of alpha.

In this case, the UE applies, to computation of the SRS TPC, P0 = -10 and alpha = 1.0 corresponding to P0-alpha-CL-loop set ID = 0, and ignores a value of the CL-loop index.

According to the first embodiment above, it is possible to appropriately perform transmission power control per TCI state for each UL channel/signal.

<Second Embodiment>

In a second embodiment, a TPC parameter set per TCI state for each of a plurality of UL channels/signals may be configured for a UE.

Parameters included in TPC parameter sets related to different UL channels/signals may be defined separately. A case that parameters included in TPC parameter sets related to different UL channels/signals are different from each other may be supported.

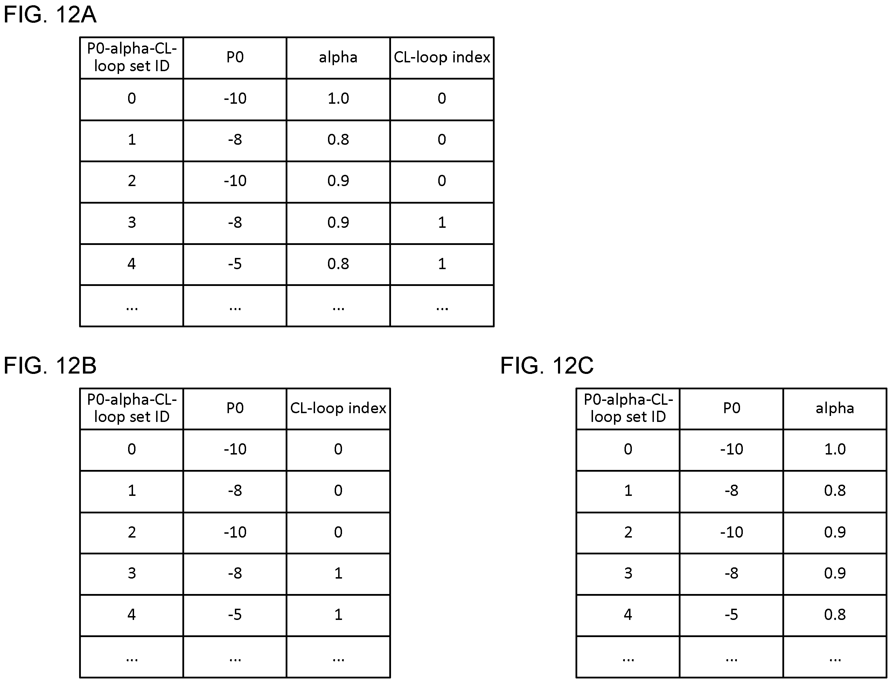

For example, a TPC parameter set for a PUSCH may include P0, $\alpha$, and closed-loop index (see FIG. 12A).

For example, a TPC parameter set for a PUCCH may include P0 and closed-loop index (see FIG. 12B).

For example, a TPC parameter set for an SRS may include P0 and $\alpha$ (see FIG. 12C).

The UE may be configured with one set of a plurality of TPC parameters corresponding to one TCI state (Embodiment 2-1). In other words, the UE may be configured with an ID of the one set corresponding to one TCI state. The UE may apply the one set to a plurality of UL channels/signals corresponding to the one TCI state.

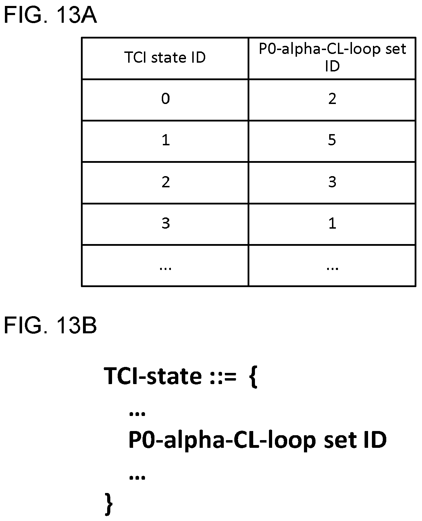

FIG. 13A is a diagram to show an example of a method for configuring the set of a plurality of TPC parameters according to Embodiment 2-1. The UE is configured with such a plurality of sets as those described in FIGS. 12A to 12C. Subsequently, the UE is configured with the set (ID of the set, P0-alpha-CL-loop set ID) corresponding to the TCI state (TCI state ID). The UE determines a TPC parameter per TCI state on the basis of such correspondence as that described in FIG. 13A, the TPC parameter being common to the plurality of UL channels/signals (for example, PUSCH/PUCCH/SRS).

FIG. 13B is a diagram to show an example of an information element related to the TPC parameter according to Embodiment 2-1. As shown in FIG. 13B, a TCI state configuration parameter (TCI-state) may include a P0-alpha-CL-loop set ID.

The TCI state configuration parameter (TCI-state) may not include the P0-alpha-CL-loop set ID. In this case, the TCI state configuration parameter (TCI-state) and the P0-alpha-CL-loop set ID may be associated with each other through a specific parameter.

According to Embodiment 2-1, it is possible to perform configuration of a plurality of TPC parameters for the UE while suppressing an increase in signaling overhead.

The UE may be configured with a plurality of IDs of sets corresponding to a plurality of respective UL channels/signals, the sets corresponding to one TCI state (Embodiment 2-2).

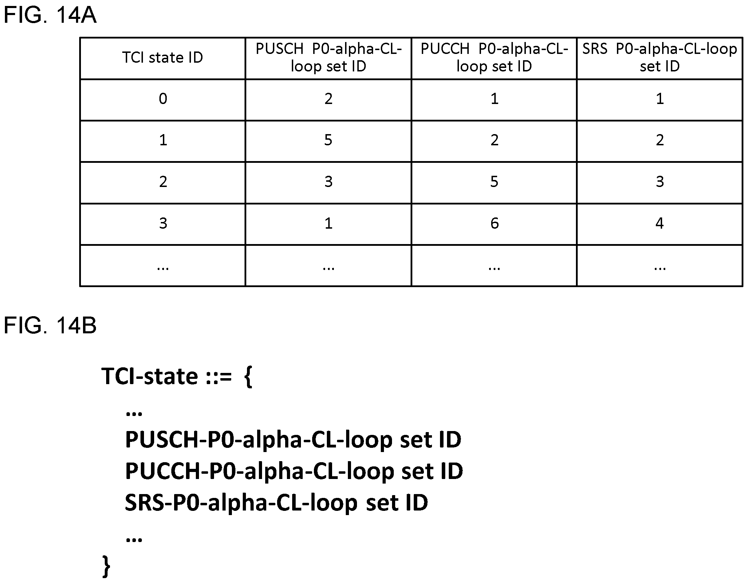

FIG. 14A is a diagram to show an example of a method for configuring the set of a plurality of TPC parameters according to Embodiment 2-2. The UE is configured with such a plurality of sets as those described in FIGS. 12A to 12C. Subsequently, the UE is configured with a set corresponding to the TCI state (TCI state ID) (ID of the set, P0-alpha-CL-loop set ID), the set corresponding to each UL channel/signal (PUSCH/PUCCH/SRS). The UE determines a TPC parameter per TCI state for each UL channel/signal on the basis of such correspondence as that described in FIG. 14A.

FIG. 14B is a diagram to show an example of an information element related to the TPC parameter according to Embodiment 2-2. As shown in FIG. 14B, a TCI state configuration parameter (TCI-state) may include a P0-alpha-CL-loop set ID for the PUSCH (P0-alpha-CL-loop set ID for PUSCH), a P0-alpha-CL-loop set ID for the PUCCH (PO-alpha-CL-loop set ID for PUCCH), and a P0-alpha-CL-loop set ID for the SRS (P0-alpha-CL-loop set ID for SRS).

The TCI state configuration parameter (TCI-state) may not include the P0-alpha-CL-loop set ID for the PUSCH / P0-alpha-CL-loop set ID for the PUCCH / P0-alpha-CL-loop set ID for the SRS. In this case, the TCI state configuration parameter (TCI-state) and the PO-alpha-CL-loop set ID for the PUSCH / P0-alpha-CL-loop set ID for the PUCCH / P0-alpha-CL-loop set ID for the SRS may be associated with each other through a specific parameter.

According to Embodiment 2-2, different transmission power control for each of different UL channels/signals is performed, but it is possible to configure almost the same transmission power for each of the different UL channels/signals.

According to the second embodiment above, it is possible to appropriately perform transmission power control per TCI state for each UL channel/signal.

<Comparison Between First Embodiment and Second Embodiment>

From the viewpoint of flexibility, it is possible to secure almost the same flexibility for both of the first embodiment and the second embodiment.

For example, when a total number of TPC parameter sets (IDs) in the first embodiment and a total number of TPC parameter sets (IDs) for the plurality of UL channels/signals in the second embodiment are the same, it is possible to secure almost the same flexibility for both of the first embodiment and the second embodiment.

More specifically, for example, a total number of PO-alpha-CL-loop set IDs in the first embodiment may be defined/configured as N (for example, N = 12). A total number of P0-alpha-CL-loop set IDs for the PUSCH, a total number of P0-alpha-CL-loop set IDs for the PUCCH, and a total number of P0-alpha-CL-loop set IDs for the SRS in the second embodiment may each be defined/configured as M (for example, M = 4). In this case, a total number of P0-alpha-CL-loop sets configurable for one TCI state in the first embodiment becomes equal to that in the second embodiment for the UE.

The same/overlapped parameter combinations/values may be configured over a plurality of UL channels/signals. Thus, in a case where the same/overlapped parameter combinations/values can be configured over a plurality of UL channels/signals, employment of the above-mentioned first embodiment is preferable, from the viewpoint of signaling overhead / flexibility.

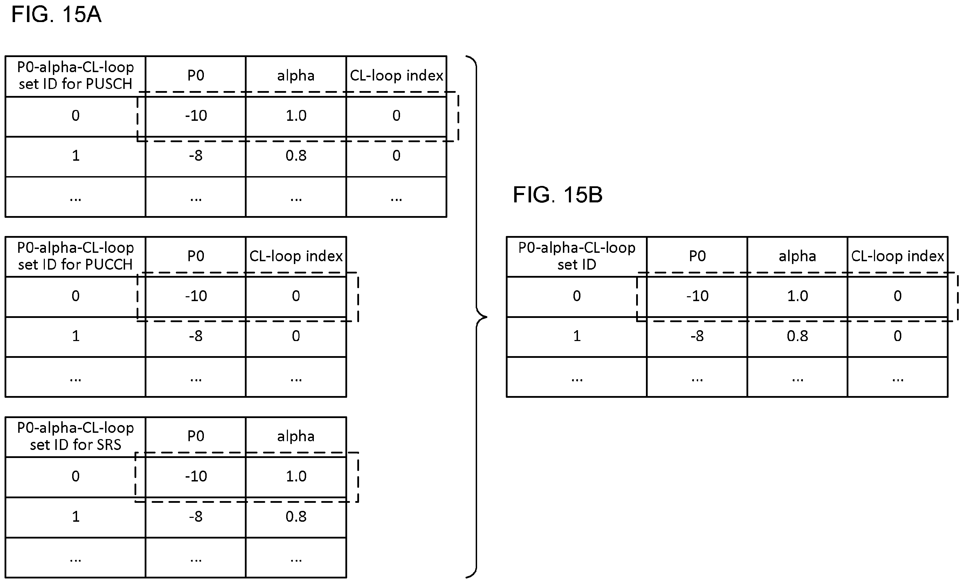

FIGS. 15A and 15B are diagrams to show examples of the TPC parameter sets according to a comparison between the first embodiment and the second embodiment. As shown in FIG. 15A, such a PO-alpha-CL-loop set for a PUSCH, a P0-alpha-CL-loop set for a PUCCH, and a P0-alpha-CL-loop set for an SRS as those described in the above-described second embodiment are configured for the UE. Respective parameters with IDs = 0 of the respective sets are values overlapping with each other for each channel/signal (each includes at least two of P0 = -10, alpha = 1.0, and CL-loop index = 0).

In such a case, as shown in FIG. 15B, it is preferable that TPC parameters applied to a plurality of channels/signals are configurable by using one correspondence, depending on one ID.

In other words, when the same/overlapped parameter combinations/values are configured over a plurality of UL channels/signals, employment of the above-described first embodiment is preferable, from the viewpoint of higher layer signaling overhead. On the other hand, when the same/overlapped parameter combinations/values are not configured over the plurality of UL channels/signals, the above-described first embodiment and the above-described second embodiment are almost the same, from the viewpoint of higher layer signaling overhead.

<Variations of First and Second Embodiments>

<<Variation 1>>

For the plurality of UL channels/signals, an ID of the set of a plurality of TPC parameters may not be configured in each TCI state. The set ID may be configured separately from the TCI state.

In this case, the set ID and the TCI state may be associated with each other through a specific parameter. The specific parameter (set) may be configured/defined separately from the set ID and TCI state.

<<Variation 2>>

The UE may receive, for the plurality of UL channels/signals, information for updating a configuration of an association between a TCI state ID and a TPC parameter set ID.

For example, the information may be notified to the UE by using a MAC CE. The UE may support the above-described update of the association by the MAC CE.

The MAC CE may include an association configuration for one or more TCI states.

According to this, it is possible to speed up update/configuration of a transmission power control-related parameter for a TCI state.

<<Variation 3>>

The UE may assume/expect that IDs of related TPC parameter sets (P0-alpha-CL-loop sets) for the SRS are the same for SRS TCI states of source RSs belonging to the same SRS resource set.

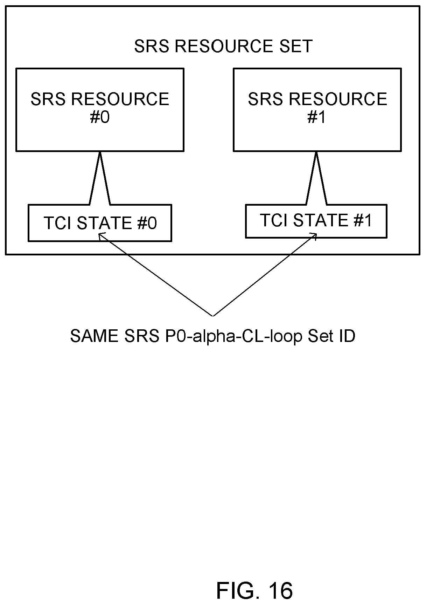

FIG. 16 is a diagram to show an example of configuration of an SRS resource set, an SRS resource, a TCI state, and a TPC parameter set ID according to variation 3. In FIG. 16, an identical SRS resource set includes SRS resource #0 and SRS resource #1. SRS resource #0 and SRS resource #1 correspond to TCI state #0 and TCI state #1, respectively.

In this case, the UE may assume/expect that TCI state #0 and TCI state #1 are related to the same TPC parameter set ID (PO-alpha-CL-loop set ID for SRS).

According to variation 3, it is possible to equalize transmission power control-related parameters for an SRS resource set, similarly to Rel. 15/16. According to variation 3, it is possible to prevent repetition transmission using different amounts of power in SRS repetition transmission for multiple TRPs.

When usage of the SRS resource set is set to "antenna switching," it is preferable that the same TPC parameter set (P0-alpha-CL-loop set) for the SRS is used for maintaining the same transmission power. Variation 3 may be employed on the basis of the usage of the SRS resource set. Specifically, when the SRS resource set is set to specific usage (for example, antenna switching), variation 3 may be employed. Note that when the usage of the SRS resource set is set to "antenna switching," the UE may transmit the SRS across a plurality of slots by using a plurality of SRS resource sets.

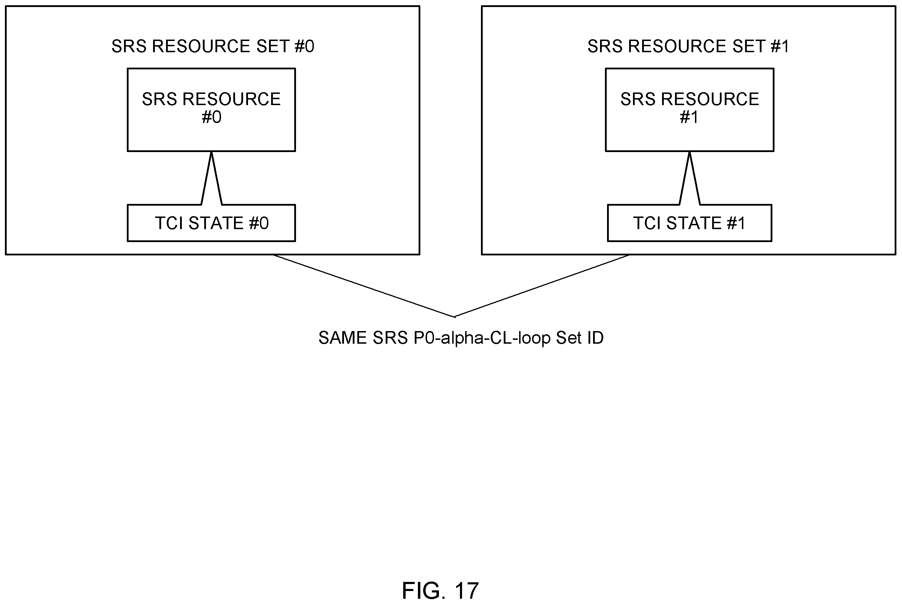

FIG. 17 is a diagram to show another example of the configuration of an SRS resource set, an SRS resource, a TCI state, and a TPC parameter set ID according to variation 3. In FIG. 17, a plurality of SRS resource sets (SRS resource set #0 and SRS resource set #1) are configured for the UE. SRS resource set #0 includes at least SRS resource #0, and SRS resource set #1 includes at least SRS resource #1. SRS resource #0 and SRS resource #1 correspond to TCI state #0 and TCI state #1, respectively.

In this case, the UE may assume/expect that TCI state #0 and TCI state #1 are related to the same TPC parameter set ID (PO-alpha-CL-loop set ID for SRS).

The UE may support configuration of different TPC parameter set IDs for the SRS between SRS resources in the same SRS resource set. The UE may report whether to support this configuration.

<Third Embodiment>

In a third embodiment, use of an SRI field will be described.

<<Embodiment 3-1>>

When a common TCI state (joint TCI state / (separate) UL TCI state) is configured for a PUSCH, a DCI format (for example, DCI format 0_1/0_2) for scheduling the PUSCH may not include the SRI field (Embodiment 3-1-1).
In the present disclosure, configuration of the common TCI state for the PUSCH may mean that a TCI state is configured in a PUSCH configuration parameter.
When the common TCI state is configured for the PUSCH, the SRI field of the DCI format for scheduling the PUSCH may be 0 bit.
In Embodiment 3-1-1, a UE may determine a TPC parameter for the PUSCH on the basis of a TCI field included in a DCI format (for example, DCI format 1_1/1_2) for scheduling a PDSCH.
When the common TCI state is configured for the PUSCH, a parameter related to PUSCH transmission power control (PUSCH-PowerControl) may not be configured (Embodiment 3-1-2). When the common TCI state is configured for the PUSCH, configuration of the parameter related to PUSCH transmission power control (PUSCH-PowerControl) may be unnecessary.
When the common TCI state is configured for the PUSCH, some specific parameters in the parameter related to PUSCH transmission power control (PUSCH-PowerControl) may not be configured (Embodiment 3-1-3) .

<<Embodiment 3-2>>

When a common TCI state (joint TCI state / (separate) UL TCI state) is not configured for the PUSCH, the UE may determine an SRI on the basis of a method defined in Rel. 15/16.
The SRI field may be present or absent on the basis of the number of SRS resources with usage corresponding to codebook/non-codebook.
The UE may determine a TPC parameter for the PUSCH on the basis of the SRI field included in a DCI format (for example, DCI format 0_1/0_2) for scheduling the PUSCH.
When the common TCI state is not configured for the PUSCH, a parameter related to PUSCH transmission power control (PUSCH-PowerControl) may be configured. When the common TCI state is not configured for the PUSCH, it may be assumed that the parameter related to PUSCH transmission power control (PUSCH-PowerControl) is configured.
According to the third embodiment above, it is possible to appropriately control, depending on the presence or absence of configuration of a common TCI state, whether to use an SRI field.

<Fourth Embodiment>

In a fourth embodiment, configuration of a common TCI state for each UL channel/signal will be described.

<<Embodiment 4-1>>

In Embodiment 4-1, configuration of a common TCI state (joint TCI state / (separate) UL TCI state) for a PUSCH will be described.
In place of / in addition to a parameter related to PUSCH transmission power control (pusch-PowerControl) in an RRC parameter for PUSCH configuration (for example, PUSCH-Config), a parameter related to a TCI state list may be included (Embodiment 4-1-1). A UE may determine the common TCI state for the PUSCH on the basis of a parameter other than the parameter related to PUSCH transmission power control (pusch-PowerControl) included in the PUSCH configuration.
When the RRC parameter for PUSCH configuration includes the parameter related to a TCI state list, the parameter related to PUSCH transmission power control (pusch-PowerControl) may not include a specific parameter. The specific parameter may be, for example, a parameter for a list related to mapping between an SRI and a PUSCH (for example, sri-PUSCH-MappingToAddModList / sri-PUSCH-MappingToReleaseList).
The parameter related to a TCI state list may be at least one of a parameter related to a TCI state list to be added/changed (for example, tci-StateToAddModList, tci-StateToAddModList-r17) and a parameter related to a TCI state list to be released (for example, tci-StateToReleaseList, tci-StateToReleaseList-r17). In other words, the UE may be configured with a plurality of TCI states on the basis of the parameter related to a TCI state list.
The parameter related to a TCI state list to be added/changed may include a specific number (for example, a number defined by maxNrofTCI-States) of TCI states. The parameter related to a TCI state list to be released may include a specific number (for example, a number defined by maxNrofTCI-States) of TCI state IDs.

For the TCI states configured by the above-described parameter related to a TCI state list for configuration of the common TCI state, an RRC information element (TCI-state) with a TCI state defined in Rel. 15 (or earlier versions) may be reused.

For the TCI states configured by the above-described parameter related to a TCI state list for configuration of the common TCI state, an RRC information element with the common TCI state (for example, Unified-TCI-state, TCI-state-r17) may be defined/used separately from the RRC information element (TCI-state) with the TCI state defined in Rel. 15 (or earlier versions). The above-described parameter related to a TCI state list may be associated with an RRC information element with the common TCI state (for example, Unified-TCI-state, TCI-state-r17) .

The RRC information element with the common TCI state (for example, Unified-TCI-state, TCI-state-r17) may include at least one of a TCI state ID (tci-StateID), a parameter related to QCL Type 1 (qcl-Type1), a parameter related to QCL Type 2 (qcl-Type2), a parameter related to a pathloss RS ID (for example, PUSCH-PathlossReferenceRS-Id), and a parameter (flag) for determining a joint TCI state / separate TCI state.

The UE may, when the parameter related to a TCI state list is configured for the PUSCH, determine that the common TCI state is configured for the PUSCH. Otherwise (for example, when the parameter related to PUSCH transmission power control (pusch-PowerControl) is configured), the UE may determine that a PUSCH SRI / spatial relation in Rel. 15/16 is configured.

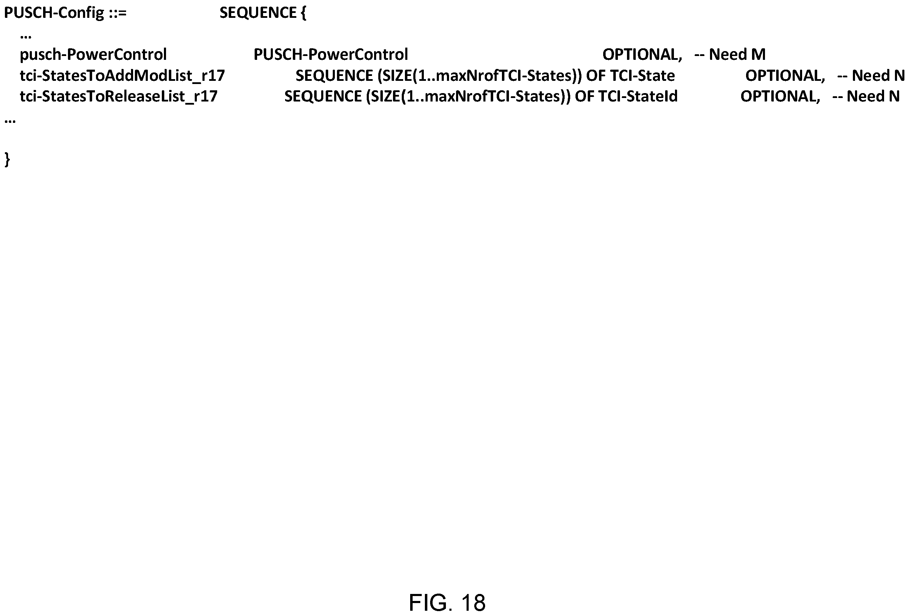

FIG. 18 is a diagram to show an example of the RRC information element according to Embodiment 4-1-1. In FIG. 18, PUSCH-Config includes a parameter related to a TCI state list (tci-StateToAddModList, tci-StateToReleaseList), in addition to pusch-PowerControl. The UE is configured with a common TCI state on the basis of the parameter related to a TCI state list.

In place of / in addition to a specific parameter included in the parameter related to PUSCH transmission power control (pusch-PowerControl) in the RRC parameter for PUSCH configuration (for example, PUSCH-Config), the parameter related to a TCI state list may be included (Embodiment 4-1-2). In Embodiment 4-1-2, the parameter related to a TCI state list may be included in a parameter related to PUSCH transmission power control (PUSCH-PowerControl).

The specific parameter may be, for example, at least one of a parameter for a list related to mapping between an SRI (spatial relation) and a PUSCH (for example, sri-PUSCH-MappingToAddModList / sri-PUSCH-MappingToReleaseList) and a parameter related to a pathloss reference RS list (for example, pathlossReferenceRSToAddModList / pathlossReferenceRSToReleaseList).

For example, the UE may determine the common TCI state for the PUSCH on the basis of a parameter other than the parameter related to mapping between a PUSCH and an SRI (spatial relation), the parameter being included in the parameter related to PUSCH transmission power control (pusch-PowerControl).

The parameter related to a TCI state list may be at least one of a parameter related to a TCI state list to be added/changed (for example, tci-StateToAddModList, tci-StateToAddModList-r17) and a parameter related to a TCI state list to be released (for example, tci-StateToReleaseList, tci-StateToReleaseList-r17). In other words, the UE may be configured with a plurality of TCI states on the basis of the parameter related to a TCI state list.

The parameter related to a TCI state list to be added/changed may include a specific number (for example, a number defined by maxNrofTCI-States) of TCI states. The parameter related to a TCI state list to be released may include a specific number (for example, a number defined by maxNrofTCI-States) of TCI state IDs.

For the TCI states configured by the above-described parameter related to a TCI state list for configuration of the common TCI state, an RRC information element (TCI-state) with a TCI state defined in Rel. 15 (or earlier versions) may be reused.

For the TCI states configured by the above-described parameter related to a TCI state list for configuration of the common TCI state, an RRC information element with the common TCI state (for example, Unified-TCI-state, TCI-state-r17) may be defined/used separately from the RRC information element (TCI-state) with the TCI state defined in Rel. 15 (or earlier versions). The above-described parameter related to a TCI state list may be associated with an RRC information element with the common TCI state (for example, Unified-TCI-state, TCI-state-r17) .

The RRC information element with the common TCI state (for example, Unified-TCI-state, TCI-state-r17) may include at least one of a TCI state ID (tci-StateID), a parameter related to QCL Type 1 (qcl-Type1), a parameter related to QCL Type 2 (qcl-Type2), a parameter related to a pathloss RS ID (for example, PUSCH-PathlossReferenceRS-Id), and a parameter (flag) for determining a joint TCI state / separate TCI state.

The UE may, when the parameter related to a TCI state list is configured for the PUSCH, determine that the common TCI state is configured for the PUSCH. Otherwise (for example, when the above-described specific parameter is configured), the UE may determine that a PUSCH SRI / spatial relation in Rel. 15/16 is configured.

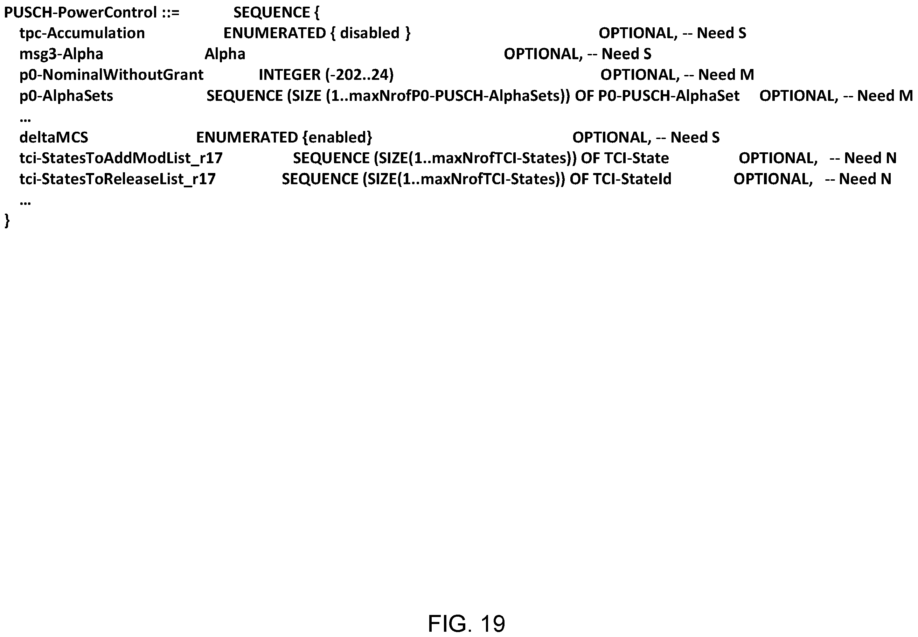

FIG. 19 is a diagram to show an example of the RRC information element according to Embodiment 4-1-2. In FIG. 19, pusch-PowerControl in PUSCH-Config includes a parameter related to a TCI state list (tci-StateToAddModList, tci-StateToReleaseList). The UE is configured with a common TCI state on the basis of the parameter related to a TCI state list.

In Embodiment 4-1-2, as shown in FIG. 19, even when PUSCH-PowerControl includes the parameter related to a TCI state list (tci-StateToAddModList, tci-StateToReleaseList), PUSCH-PowerControl may include at least one of a parameter related to TPC accumulation (tpc-Accumulation), a parameter related to α of message 3 (msg3-Alpha), a parameter related to P0 for configured grant transmission / SPS transmission (p0-NominalWithoutGrant), and a parameter indicating application of a delta MCS (deltaMCS).

<<Embodiment 4-2>>

In Embodiment 4-2, configuration of a common TCI state (joint TCI state / (separate) UL TCI state) for a PUCCH will be described.

In place of / in addition to a parameter related to a spatial relation information list in an RRC parameter for PUCCH configuration (for example, PUCCH-Config), a parameter related to a TCI state list may be included. For example, the UE may determine the common TCI state for the PUCCH on the basis of a parameter other than the parameter related to a spatial relation information list (pusch-PowerControl) included in the PUCCH configuration.

The parameter related to a spatial relation information list may be, for example, at least one of spatialRelation-InfoToAddModList, spatialRelationInfoToReleaseList, pucch-PowerControl, spatialRelationInfoToAddModListSizeExt-v1610, spatialRelationInfoToReleaseListSizeExt-v1610, spatialRelationInfoToAddModListExt-v1610, and spatialRelationInfoToReleaseListExt-v1610.

The parameter related to a TCI state list may be at least one of a parameter related to a TCI state list to be added/changed (for example, tci-StateToAddModList, tci-StateToAddModList-r17) and a parameter related to a TCI state list to be released (for example, tci-StateToReleaseList, tci-StateToReleaseList-r17).

The parameter related to a TCI state list to be added/changed may include a specific number (for example, a number defined by maxNrofTCI-States) of TCI states. The parameter related to a TCI state list to be released may include a specific number (for example, a number defined by maxNrofTCI-States) of TCI state IDs.

For the TCI states configured by the above-described parameter related to a TCI state list for configuration of the common TCI state, an RRC information element (TCI-state) with a TCI state defined in Rel. 15 (or earlier versions) may be reused.

For the TCI states configured by the above-described parameter related to a TCI state list for configuration of the common TCI state, an RRC information element with the common TCI state (for example, Unified-TCI-state, TCI-state-r17) may be defined/used separately from the RRC information element (TCI-state) with the TCI state defined in Rel. 15 (or earlier versions). The above-described parameter related to a TCI state list may be associated with an RRC information element with the common TCI state (for example, Unified-TCI-state, TCI-state-r17) .

The RRC information element with the common TCI state (for example, Unified-TCI-state, TCI-state-r17) may include at least one of a TCI state ID (tci-StateID), a parameter related to QCL Type 1 (qcl-Type1), a parameter related to QCL Type 2 (qcl-Type2), a parameter related to a pathloss RS ID (for example, PUCCH-PathlossReferenceRS-Id), and a parameter (flag) for determining a joint TCI state / separate TCI state.

The UE may, when the parameter related to a TCI state list is configured for the PUCCH, determine that the common TCI state is configured for the PUCCH. Otherwise (for example, when the parameter related to a spatial relation information list is configured), the UE may determine that a PUCCH SRI / spatial relation in Rel. 15/16 is configured.

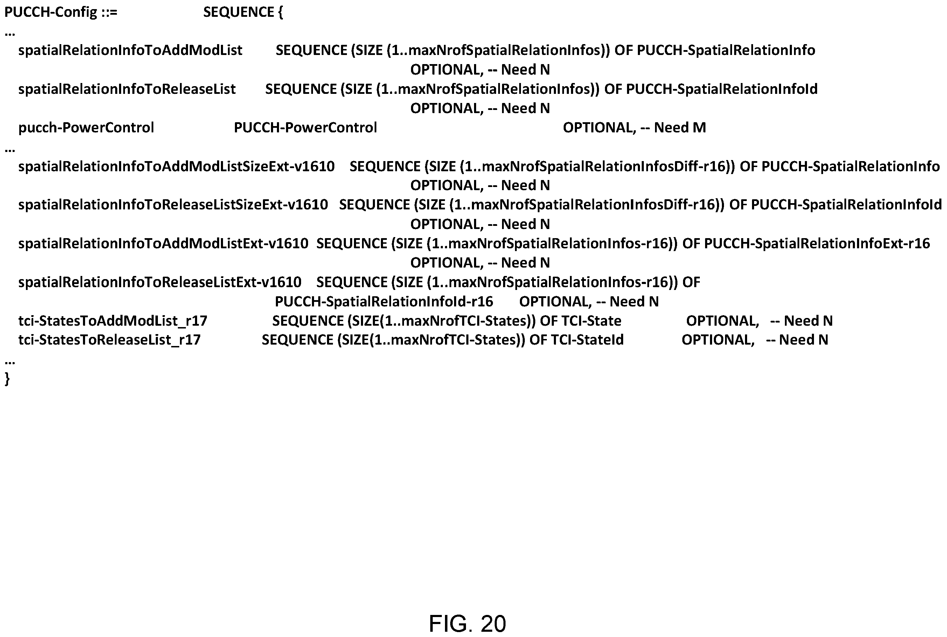

FIG. 20 is a diagram to show an example of the RRC information element according to Embodiment 4-2. In FIG. 20, PUCCH-Config includes a parameter related to a TCI state list (tci-StateToAddModList, tci-StateToReleaseList), in addition to the parameter related to a spatial relation information list. The UE is configured with a common TCI state on the basis of the parameter related to a TCI state list.

According to Embodiment 4-1 and Embodiment 4-2 described above, it is possible to determine whether to apply a common TCI state to each UL channel/signal. The UE may determine that whether the common TCI state is applied to each UL channel/signal is configured.

The UE may receive a MAC CE for performing mapping between each of a plurality of configured PUCCH resources and a TCI state ID. The UE may determine, on the basis of the MAC CE, a TCI state corresponding to the PUCCH resource.

In the present disclosure, the UE may perform control so as to perform TPC command accumulation for each UL channel/signal. The UE may perform control so as to perform TPC command accumulation for each TCI state (for each common TCI state). The UE may perform control so as to perform TPC command accumulation for each UL channel/signal and for each TCI state (for each common TCI state).

According to the fourth embodiment above, it is possible to appropriately configure a common TCI state for a PUSCH/PUCCH, and it is possible to appropriately perform transmission power control on the basis of the configured TCI state, in combination with the above-described first to third embodiments.

<Fifth Embodiment>

In a fifth embodiment, open-loop power control (OLPC) will be described.

When a common TCI state (joint TCI state / (separate) UL TCI state) is configured for a PUSCH, an open-loop power control parameter (for example, p0-List / p0-List-r16 / p0-List-r17) may be added to the TPC parameter set described in the above-described first embodiment / second embodiment.

A UE may determine application of the open-loop power control parameter on the basis of at least one of an open-loop power control parameter configured by using higher layer signaling, an open-loop power control parameter set indication field included in DCI, and the presence or absence of (a TCI field with) a common TCI state in DCI.

For example, when the open-loop power control parameter set indication field is included in a DCI format, and a value of the field indicates a first value (for example, 1), the UE may apply the open-loop power control parameter (p0-List). In this case, the DCI may include (the TCI field with) the common TCI state, or the DCI may not include (the TCI field with) the common TCI state, and one open-loop P0 may be configured in the open-loop power control parameter (for example, p0-List-r16).

When the open-loop power control parameter set indication field is included in a DCI format, and a value of the field indicates a second value (for example, 10 or 01), the UE may apply the open-loop power control parameter (p0-List). In this case, the DCI may not include (the TCI field with) the common TCI state, and two open-loop P0s may be configured in the open-loop power control parameter (for example, p0-List-r16).

For example, when the open-loop power control parameter set indication field is included in a DCI format, and a value of the field indicates a first value (for example, 1), the UE may apply the open-loop power control parameter (p0-List). In this case, the DCI may include an SRI field, or the DCI may not include the SRI field, and one open-loop P0 may be configured in the open-loop power control parameter (for example, p0-List-r16).

When the open-loop power control parameter set indication field is included in a DCI format, and a value of the field indicates a second value (for example, 10 or 01), the UE may apply the open-loop power control parameter (p0-List). In this case, the DCI may not include an SRI field, and two open-loop P0s may be configured in the open-loop power control parameter (for example, p0-List-r16).

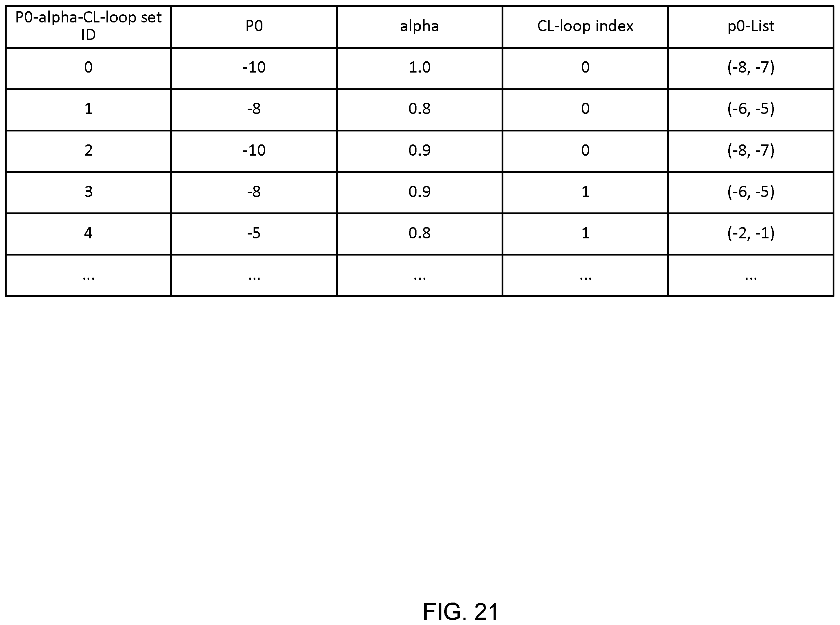

FIG. 21 is a diagram to show an example of a set of a plurality of TPC parameters according to the fifth embodiment. In the example shown in FIG. 21, a plurality of sets of P0, a (alpha), CL-loop index, and open-loop power control parameter (described as p0-List) are configured for the UE. The set is identified by a P0-alpha-CL-loop set ID.

Each open-loop power control parameter (p0-List) may, in a first condition, one P0 value. The first condition may be, for example, a case where the common TCI state is configured for the PUSCH. The first condition may be, for example, a case where the common TCI state is not configured for the PUSCH and where both a first specific higher layer parameter (for example, olpc-ParameterSetDCI-0-1) and a second specific higher layer parameter (olpc-ParameterSetDCI-0-2) are set to N bits (for example, N = 1).

The first condition may be, for example, a case where an SRI field is present in the DCI. The first condition may be, for example, a case where the SRI field is absent in the DCI and where both a first specific higher layer parameter (for example, olpc-ParameterSetDCI-0-1) and a second specific higher layer parameter (olpc-ParameterSetDCI-0-2) are set to N bits (for example, N = 1).

Each open-loop power control parameter (p0-List) may, in a second condition, two P0 values. The second condition may be, for example, a case where the common TCI state is not configured for the PUSCH and where either a first specific higher layer parameter (for example, olpc-ParameterSetDCI-0-1) or a second specific higher layer parameter (olpc-ParameterSetDCI-0-2) is set to M bits (for example, M = 2).

Each open-loop power control parameter (p0-List) may, in a second condition, two P0 values. The second condition may be a case where the SRI field is absent in the DCI and where either a first specific higher layer parameter (for example, olpc-ParameterSetDCI-0-1) or a second specific higher layer parameter (olpc-ParameterSetDCI-0-2) is set to M bits (for example, M = 2).

The open-loop power control parameter (p0-List) may be configured to be included in a TCI state configuration parameter (TCI-state).

The open-loop power control parameter (p0-List) may be associated with a TCI state separately from P0 / $\alpha$ / CL-loop index. The association may be performed through a specific parameter.

The open-loop power control parameter (p0-List) may be associated with an SRI.

According to the fifth embodiment above, it is possible to appropriately perform open-loop transmission power control even when a TCI state applied to a plurality of channels is configured.

<Sixth Embodiment>

A higher layer parameter (RRC IE) / UE capability corresponding to a function (characteristics, feature) in at least one of the plurality of embodiments above may be defined. The UE capability may indicate that the UE supports this function.

The UE configured with the higher layer parameter (for enabling the function) corresponding to the function may perform the function. "The UE not configured with the higher layer parameter corresponding to the function does not perform the function (for example, follows Rel. 15/16)" may be defined.

The UE that has reported the UE capability indicating support of the function may perform the function. "The UE that has not reported the UE capability indicating support of the function does not perform the function (for example, follows Rel. 15/16)" may be defined.

When the UE reports the UE capability indicating support of the function and is configured with the higher layer parameter corresponding to the function, the UE may perform the function. "When the UE does not report the UE capability indicating support of the function or when the UE is not configured with the higher layer parameter corresponding to the function, the UE does not perform the function (for example, follows Rel. 15/16)" may be defined.

The UE capability may indicate whether the UE supports this function.

The function may be a unified TCI state framework.

The UE capability may be defined by whether the UE supports a unified TCI state.

The UE capability may be defined by whether the UE supports a unified TCI state for a specific channel/signal.

The UE capability may be defined by whether the UE supports a unified TCI state for a PUSCH.

The UE capability may be defined by whether the UE supports a unified TCI state for a PUCCH.

The UE capability may be defined by whether the UE supports a unified TCI state for an SRS.

The UE capability may be defined by whether the UE supports TPC parameter / PL-RS configuration per unified TCI state for a specific channel/signal. The UE capability may be defined by whether the UE supports update per unified TCI state for a specific channel/signal, the update using a MAC CE for a TPC parameter / PL-RS.

The UE capability may be defined by whether the UE supports TPC parameter / PL-RS configuration per unified TCI state for a PUSCH. The UE capability may be defined by whether the UE supports update per unified TCI state for a PUSCH, the update using a MAC CE for a TPC parameter / PL-RS.

The UE capability may be defined by whether the UE supports TPC parameter / PL-RS configuration per unified TCI state for a PUCCH. The UE capability may be defined by whether the UE supports update per unified TCI state for a PUCCH, the update using a MAC CE for a TPC parameter / PL-RS.

The UE capability may be defined by whether the UE supports TPC parameter / PL-RS configuration per unified TCI state for an SRS. The UE capability may be defined by whether the UE supports update per unified TCI state for an SRS, the update using a MAC CE for a TPC parameter / PL-RS.

The UE capability may be defined by the number of TPC parameter set IDs supported by the UE in the above-described first/second embodiment.

The UE capability may be defined by whether the UE supports UE operation related to the above-mentioned description in each embodiment.

According to the sixth embodiment above, the UE can implement the above-described functions while maintaining compatibility with an existing specification.


(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

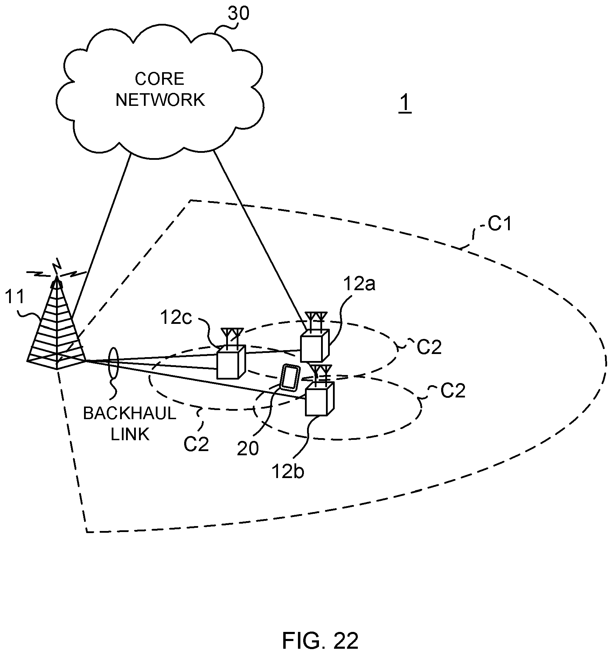

FIG. 22 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

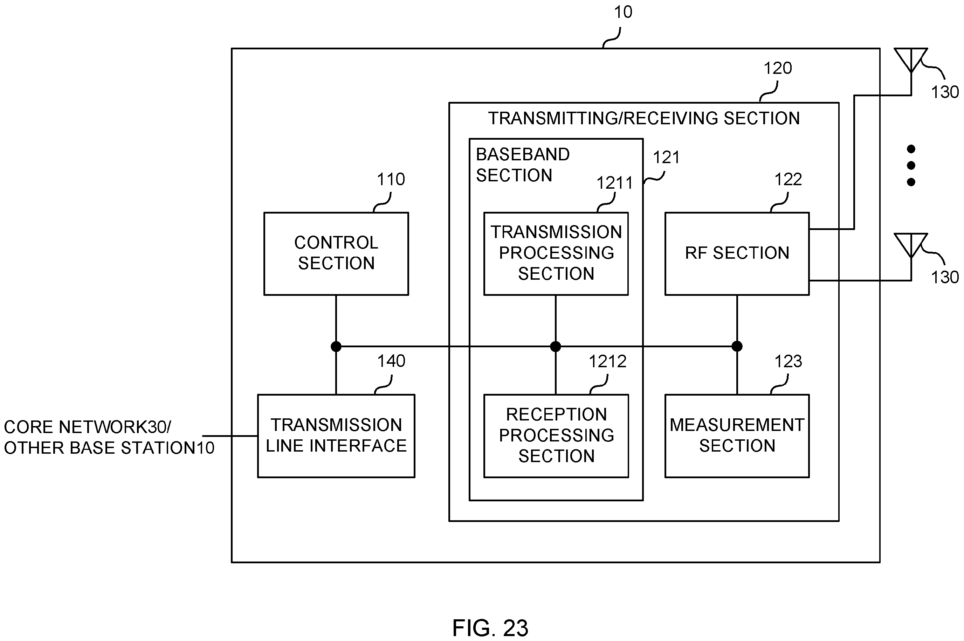

FIG. 23 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit first information including a plurality of sets of a plurality of transmission power control parameters and second information related to a transmission configuration indication (TCI) state corresponding to one of the sets. The control section 110 may configure, by using the first information and the second information, transmission power control per TCI state to be applied to at least one of a specific uplink channel and a specific uplink signal (first, second, and fifth embodiments).

The transmitting/receiving section 120 may transmit a Radio Resource Control (RRC) information element related to an uplink channel configuration, the RRC information element being associated with configuration information related to a transmission configuration indication (TCI) state list applied to at least one of a plurality of channels and a plurality of signals. The control section 110 may configure, by using the configuration information, a TCI state applied per uplink channel (fourth embodiment).

(User Terminal)

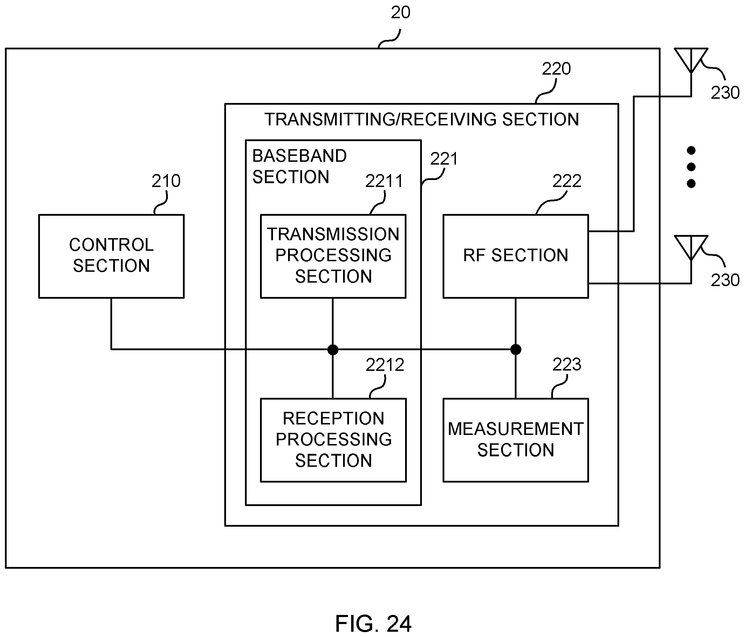

FIG. 24 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

The transmitting/receiving section 220 may receive first information including a plurality of sets of a plurality of transmission power control parameters and second information related to a transmission configuration indication (TCI) state corresponding to one of the sets. The control section 210 may perform, on the basis of the first information and the second information, transmission power control per TCI state to be applied to at least one of a specific uplink channel and a specific uplink signal (first, second, and fifth embodiments).

The parameters included in the sets may be at least two of a parameter related to transmission power offset (for example, P0), a parameter related to a fractional factor (for example, $\alpha$), a parameter related to a closed-loop index, and a parameter related to transmission power offset in open-loop transmission power control (first, second, and fifth embodiments).

The sets of the plurality of transmission power control parameters may be sets common to at least one of a plurality of uplink channels and a plurality of uplink signals (first and fifth embodiments).

When a TCI state applied to at least one of a plurality of channels and a plurality of signals is configured, the control section 210 may determine a transmission power control parameter for an uplink shared channel on the basis of a TCI field included in downlink control information for scheduling a downlink shared channel (third embodiment).

The transmitting/receiving section 220 may receive a Radio Resource Control (RRC) information element related to an uplink channel configuration, the RRC information element being associated with configuration information related to a transmission configuration indication (TCI) state list applied to at least one of a plurality of channels and a plurality of signals. The control section 210 may determine, on the basis of the configuration information, a TCI state applied per uplink channel (fourth embodiment).

The configuration information may be included in a physical uplink shared channel (PUSCH) configuration. The control section 210 may determine the TCI state on the basis of a parameter other than a parameter related to PUSCH transmission power control (fourth embodiment).

The configuration information may be included in a parameter related to PUSCH transmission power control, the parameter being included in a physical uplink shared channel (PUSCH) configuration. The control section 210 may determine the TCI state on the basis of a parameter other than a parameter related to mapping between a PUSCH and spatial relation information (fourth embodiment).

The configuration information may be included in a physical uplink control channel (PUCCH) configuration. The control section 210 may determine the TCI state on the basis of a parameter other than a parameter related to a spatial relation information list (fourth embodiment).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

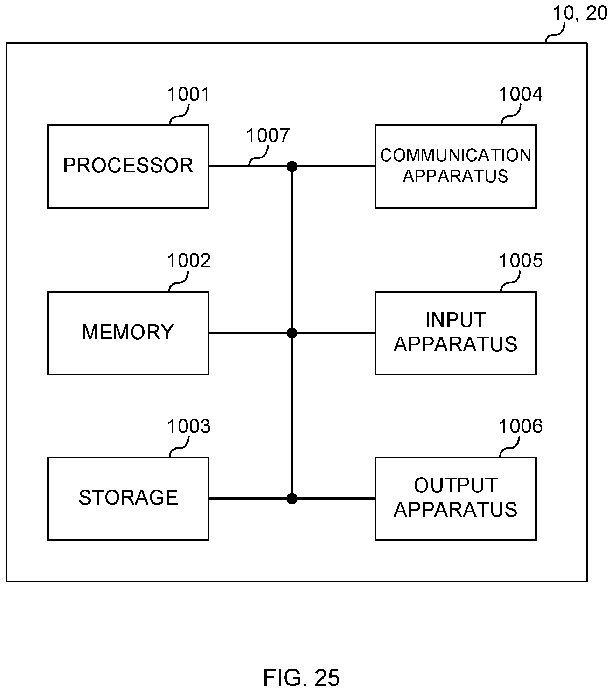

For example, a base station, a user terminal, and so on according to one embodiment of the present disclosure may function as a computer that executes the processes of the radio communication method of the present disclosure. FIG. 25 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of") .

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a receiving section that receives a Radio Resource Control (RRC) information element related to an uplink channel configuration, the RRC information element being associated with configuration information related to a transmission configuration indication (TCI) state list applied to at least one of a plurality of channels and a plurality of signals; and
   a control section that determines, on the basis of the configuration information, a TCI state applied per uplink channel.

2. The terminal according to claim 1, wherein

   the configuration information is included in a physical uplink shared channel (PUSCH) configuration, and
   the control section determines the TCI state on the basis of a parameter other than a parameter related to PUSCH transmission power control.

3. The terminal according to claim 1, wherein

   the configuration information is included in a parameter related to PUSCH transmission power control, the parameter being included in a physical uplink shared channel (PUSCH) configuration, and
   the control section determines the TCI state on the basis of a parameter other than a parameter related to mapping between a PUSCH and spatial relation information.

4. The terminal according to claim 1, wherein

   the configuration information is included in a physical uplink control channel (PUCCH) configuration, and
   the control section determines the TCI state on the basis of a parameter other than a parameter related to a spatial relation information list.

5. A radio communication method for a terminal, the radio communication method comprising:

receiving a Radio Resource Control (RRC) information element related to an uplink channel configuration, the RRC information element being associated with configuration information related to a transmission configuration indication (TCI) state list applied to at least one of a plurality of channels and a plurality of signals; and determining, on the basis of the configuration information, a TCI state applied per uplink channel.

6. A base station comprising:

a transmitting section that transmits a Radio Resource Control (RRC) information element related to an uplink channel configuration, the RRC information element being associated with configuration information related to a transmission configuration indication (TCI) state list applied to at least one of a plurality of channels and a plurality of signals; and a control section that configures, by using the configuration information, a TCI state applied per uplink channel.

```
PUSCH-PowerControl ::=          SEQUENCE {
  ...
  p0-AlphaSets              SEQUENCE (SIZE (1..maxNrofP0-PUSCH-AlphaSets)) OF P0-PUSCH-AlphaSet    OPTIONAL, -- Need M
  ...
  twoPUSCH-PC-AdjustmentStates    ENUMERATED {twoStates}                          OPTIONAL, -- Need S
  ...
  sri-PUSCH-MappingToAddModList      SEQUENCE (SIZE (1..maxNrofSRI-PUSCH-Mappings)) OF SRI-PUSCH-PowerControl
                                                  OPTIONAL, -- Need N
  sri-PUSCH-MappingToReleaseList     SEQUENCE (SIZE (1..maxNrofSRI-PUSCH-Mappings)) OF SRI-PUSCH-PowerControlId
                                                  OPTIONAL  -- Need N
}


P0-PUSCH-AlphaSet ::=          SEQUENCE {
  p0-PUSCH-AlphaSetId        P0-PUSCH-AlphaSetId,
  p0                 INTEGER (-16..15)                          OPTIONAL, -- Need S
  alpha            Alpha                               OPTIONAL  -- Need S
}


P0-PUSCH-AlphaSetId ::=        INTEGER (0..maxNrofP0-PUSCH-AlphaSets-1)


SRI-PUSCH-PowerControl ::=       SEQUENCE {
  sri-PUSCH-PowerControlId        SRI-PUSCH-PowerControlId,
  sri-PUSCH-PathlossReferenceRS-Id    PUSCH-PathlossReferenceRS-Id,
  sri-P0-PUSCH-AlphaSetId        P0-PUSCH-AlphaSetId,
  sri-PUSCH-ClosedLoopIndex        ENUMERATED { i0, i1 }
}
```

<div align="center">FIG. 1</div>

EP 4 383 782 A1

```
PUSCH-PowerControl-v1610 ::=      SEQUENCE {
    ...
    p0-PUSCH-SetList-r16          SEQUENCE (SIZE (1..maxNrofSRI-PUSCH-Mappings)) OF P0-PUSCH-Set-r16     OPTIONAL, -- Need R
    olpc-ParameterSet             SEQUENCE {
        olpc-ParameterSetDCI-0-1-r16      INTEGER (1..2)                      OPTIONAL, -- Need R
        olpc-ParameterSetDCI-0-2-r16      INTEGER (1..2)                      OPTIONAL  -- Need R
    }                                                      OPTIONAL, -- Need M
    ...
}

P0-PUSCH-Set-r16 ::=          SEQUENCE {
    p0-PUSCH-SetId-r16            P0-PUSCH-SetId-r16,
    p0-List-r16                  SEQUENCE (SIZE (1..maxNrofP0-PUSCH-Set-r16)) OF P0-PUSCH-r16          OPTIONAL, -- Need R
    ...
}

P0-PUSCH-SetId-r16 ::=        INTEGER (0..maxNrofSRI-PUSCH-Mappings-1)

P0-PUSCH-r16 ::=              INTEGER (-16..15)
```

FIG. 2

EP 4 383 782 A1

```
PUCCH-PowerControl ::=          SEQUENCE {
   ...
   p0-Set                       SEQUENCE (SIZE (1..maxNrofPUCCH-P0-PerSet)) OF P0-PUCCH        OPTIONAL, -- Need M
   ...
   twoPUCCH-PC-AdjustmentStates    ENUMERATED {twoStates}                                      OPTIONAL, -- Need S
   ...,
   ...
}

P0-PUCCH ::=              SEQUENCE {
   p0-PUCCH-Id              P0-PUCCH-Id,
   p0-PUCCH-Value           INTEGER (-16..15)
}

P0-PUCCH-Id ::=           INTEGER (1..8)

PUCCH-SpatialRelationInfo ::=     SEQUENCE {
   pucch-SpatialRelationInfoId     PUCCH-SpatialRelationInfoId,
   ...
   },
   pucch-PathlossReferenceRS-Id      PUCCH-PathlossReferenceRS-Id,
   p0-PUCCH-Id              P0-PUCCH-Id,
   closedLoopIndex           ENUMERATED { i0, i1 }
}
```

FIG. 3

EP 4 383 782 A1

```
SRS-ResourceSet ::=              SEQUENCE {
    ...
    },
    ...
    alpha                    Alpha                              OPTIONAL, -- Need S
    p0                  INTEGER (-202..24)                          OPTIONAL, -- Cond Setup
    pathlossReferenceRS         PathlossReferenceRS-Config                  OPTIONAL, -- Need M
    ...
    ]]
}
```

EP 4 383 782 A1

FIG. 4

TCI STATE LIST
CONFIGURED FOR
CC #0

| TCI-state#0 |
| TCI-state#1 |
| TCI-state#2 |
| ... |
| TCI-state#63 |

TCI STATE LIST
CONFIGURED FOR
CC #1

| TCI-state#0 |
| TCI-state#1 |
| TCI-state#2 |
| ... |
| TCI-state#63 |

TCI STATE LIST
CONFIGURED FOR
CC #2

| TCI-state#0 |
| TCI-state#1 |
| TCI-state#2 |
| ... |
| TCI-state#63 |

TCI STATE LIST
CONFIGURED FOR
CC #3

| TCI-state#0 |
| TCI-state#1 |
| TCI-state#2 |
| ... |
| TCI-state#63 |

ACTIVATED BY MAC CE

AUTOMATICALLY ACTIVATED

CC#0          CC#1          CC#2          CC#3

APPLICABLE CC LIST = {CC#0, CC#1, CC#2, CC#3}

FIG. 5

## FIG. 6A

configuration for DL&UL (RRC)

activation for DL&UL (MAC CE)

SSB/ CSI-RS/ SRS

joint indication

indication for DL&UL (DCI)

active TCI pool for DL&UL

one or subset of all DL&UL

## FIG. 6B

configuration for DL&UL (RRC)

activation for DL/UL (MAC CE)

SSB/ CSI-RS/ SRS

separate indication

indication for DL (DCI)

one or subset of all DL

indication for UL (DCI)

one or subset of all UL

active TCI pool for DL&UL, or separate active TCI pools for DL&UL

EP 4 383 782 A1

| CHANNEL/ SIGNAL | P0 | alpha | CL-loop index |
|---|---|---|---|
| PUSCH | Configured | Configured | Configured |
| PUCCH | Configured | - | Configured |
| SRS | Configured | Configured | - |

FIG. 7

EP 4 383 782 A1

| P0-alpha-CL-loop set ID | P0 | alpha | CL-loop index |
|---|---|---|---|
| 0 | -10 | 1.0 | 0 |
| 1 | -8 | 0.8 | 0 |
| 2 | -10 | 0.9 | 0 |
| 3 | -8 | 0.9 | 1 |
| 4 | -5 | 0.8 | 1 |
| ... | ... | ... | ... |

FIG. 8

FIG. 9A

| TCI state ID | P0-alpha-CL-loop set ID |
|---|---|
| 0 | 2 |
| 1 | 5 |
| 2 | 3 |
| 3 | 1 |
| ... | ... |

FIG. 9B

```
TCI-state ::= {
    ...
    P0-alpha-CL-loop set ID
    ...
}
```

## FIG. 10A

| TCI state ID | 1st P0-alpha-CL-loop set ID (for PUSCH) | 2nd P0-alpha-CL-loop set ID (for PUCCH) | 3rd P0-alpha-CL-loop set ID (for SRS) |
|---|---|---|---|
| 0 | 2 | 1 | 1 |
| 1 | 5 | 2 | 2 |
| 2 | 3 | 5 | 3 |
| 3 | 1 | 6 | 4 |
| ... | ... | ... | ... |

## FIG. 10B

```
TCI-state ::= {
    ...
    P0-alpha-CL-loop set ID for PUSCH
    P0-alpha-CL-loop set ID for PUCCH
    P0-alpha-CL-loop set ID for SRS
    ...
}
```

EP 4 383 782 A1

| P0-alpha-CL-loop set ID | P0 | alpha | CL-loop index |
|---|---|---|---|
| 0 | -10 | 1.0 | 0 |
| 1 | -8 | 0.8 | 0 |
| 2 | -10 | 0.9 | 0 |
| 3 | -8 | 0.9 | 1 |
| 4 | -5 | 0.8 | 1 |
| ... | ... | ... | ... |

FIG. 11

FIG. 12A

| P0-alpha-CL-loop set ID | P0 | alpha | CL-loop index |
|---|---|---|---|
| 0 | -10 | 1.0 | 0 |
| 1 | -8 | 0.8 | 0 |
| 2 | -10 | 0.9 | 0 |
| 3 | -8 | 0.9 | 1 |
| 4 | -5 | 0.8 | 1 |
| ... | ... | ... | ... |

FIG. 12B

| P0-alpha-CL-loop set ID | P0 | CL-loop index |
|---|---|---|
| 0 | -10 | 0 |
| 1 | -8 | 0 |
| 2 | -10 | 0 |
| 3 | -8 | 1 |
| 4 | -5 | 1 |
| ... | ... | ... |

FIG. 12C

| P0-alpha-CL-loop set ID | P0 | alpha |
|---|---|---|
| 0 | -10 | 1.0 |
| 1 | -8 | 0.8 |
| 2 | -10 | 0.9 |
| 3 | -8 | 0.9 |
| 4 | -5 | 0.8 |
| ... | ... | ... |

## FIG. 13A

| TCI state ID | P0-alpha-CL-loop set ID |
|:---:|:---:|
| 0 | 2 |
| 1 | 5 |
| 2 | 3 |
| 3 | 1 |
| ... | ... |

## FIG. 13B

**TCI-state ::= {**

    **...**

    **P0-alpha-CL-loop set ID**

    **...**

**}**

## FIG. 14A

| TCI state ID | PUSCH P0-alpha-CL-loop set ID | PUCCH P0-alpha-CL-loop set ID | SRS P0-alpha-CL-loop set ID |
|---|---|---|---|
| 0 | 2 | 1 | 1 |
| 1 | 5 | 2 | 2 |
| 2 | 3 | 5 | 3 |
| 3 | 1 | 6 | 4 |
| ... | ... | ... | ... |

## FIG. 14B

```
TCI-state ::= {
    ...
    PUSCH-P0-alpha-CL-loop set ID
    PUCCH-P0-alpha-CL-loop set ID
    SRS-P0-alpha-CL-loop set ID
    ...
}
```

## FIG. 15A

| P0-alpha-CL-loop set ID for PUSCH | P0 | alpha | CL-loop index |
|---|---|---|---|
| 0 | -10 | 1.0 | 0 |
| 1 | -8 | 0.8 | 0 |
| ... | ... | ... | ... |

| P0-alpha-CL-loop set ID for PUCCH | P0 | CL-loop index |
|---|---|---|
| 0 | -10 | 0 |
| 1 | -8 | 0 |
| ... | ... | ... |

| P0-alpha-CL-loop set ID for SRS | P0 | alpha |
|---|---|---|
| 0 | -10 | 1.0 |
| 1 | -8 | 0.8 |
| ... | ... | ... |

## FIG. 15B

| P0-alpha-CL-loop set ID | P0 | alpha | CL-loop index |
|---|---|---|---|
| 0 | -10 | 1.0 | 0 |
| 1 | -8 | 0.8 | 0 |
| ... | ... | ... | ... |

EP 4 383 782 A1

SRS RESOURCE SET

SRS RESOURCE #0

SRS RESOURCE #1

TCI STATE #0

TCI STATE #1

SAME SRS P0-alpha-CL-loop Set ID

FIG. 16

EP 4 383 782 A1

SRS RESOURCE SET #0

SRS RESOURCE
#0

TCI STATE #0

SRS RESOURCE SET #1

SRS RESOURCE
#1

TCI STATE #1

SAME SRS P0-alpha-CL-loop Set ID

FIG. 17

```
PUSCH-Config ::=              SEQUENCE {
    ...
    pusch-PowerControl           PUSCH-PowerControl                          OPTIONAL,  -- Need M
    tci-StatesToAddModList_r17        SEQUENCE (SIZE(1..maxNrofTCI-States)) OF TCI-State        OPTIONAL,  -- Need N
    tci-StatesToReleaseList_r17       SEQUENCE (SIZE(1..maxNrofTCI-States)) OF TCI-StateId       OPTIONAL,  -- Need N
    ...

}
```

FIG. 18

EP 4 383 782 A1

```
PUSCH-PowerControl ::=            SEQUENCE {
    tpc-Accumulation              ENUMERATED { disabled }                              OPTIONAL, -- Need S
    msg3-Alpha              Alpha                                   OPTIONAL, -- Need S
    p0-NominalWithoutGrant          INTEGER (-202..24)                           OPTIONAL, -- Need M
    p0-AlphaSets               SEQUENCE (SIZE (1..maxNrofP0-PUSCH-AlphaSets)) OF P0-PUSCH-AlphaSet    OPTIONAL, -- Need M
    ...
    deltaMCS                ENUMERATED {enabled}                            OPTIONAL, -- Need S
    tci-StatesToAddModList_r17          SEQUENCE (SIZE(1..maxNrofTCI-States)) OF TCI-State          OPTIONAL,  -- Need N
    tci-StatesToReleaseList_r17         SEQUENCE (SIZE(1..maxNrofTCI-States)) OF TCI-StateId         OPTIONAL,  -- Need N
    ...
}
```

FIG. 19

```
PUCCH-Config ::=                 SEQUENCE {
...
  spatialRelationInfoToAddModList      SEQUENCE (SIZE (1..maxNrofSpatialRelationInfos)) OF PUCCH-SpatialRelationInfo
                                              OPTIONAL, -- Need N
  spatialRelationInfoToReleaseList     SEQUENCE (SIZE (1..maxNrofSpatialRelationInfos)) OF PUCCH-SpatialRelationInfoId
                                              OPTIONAL, -- Need N
  pucch-PowerControl              PUCCH-PowerControl                      OPTIONAL, -- Need M
...
  spatialRelationInfoToAddModListSizeExt-v1610    SEQUENCE (SIZE (1..maxNrofSpatialRelationInfosDiff-r16)) OF PUCCH-SpatialRelationInfo
                                              OPTIONAL, -- Need N
  spatialRelationInfoToReleaseListSizeExt-v1610   SEQUENCE (SIZE (1..maxNrofSpatialRelationInfosDiff-r16)) OF PUCCH-SpatialRelationInfoId
                                              OPTIONAL, -- Need N
  spatialRelationInfoToAddModListExt-v1610   SEQUENCE (SIZE (1..maxNrofSpatialRelationInfos-r16)) OF PUCCH-SpatialRelationInfoExt-r16
                                              OPTIONAL, -- Need N
  spatialRelationInfoToReleaseListExt-v1610   SEQUENCE (SIZE (1..maxNrofSpatialRelationInfos-r16)) OF
                                              PUCCH-SpatialRelationInfoId-r16   OPTIONAL, -- Need N
  tci-StatesToAddModList_r17           SEQUENCE (SIZE(1..maxNrofTCI-States)) OF TCI-State        OPTIONAL,  -- Need N
  tci-StatesToReleaseList_r17          SEQUENCE (SIZE(1..maxNrofTCI-States)) OF TCI-StateId      OPTIONAL,  -- Need N
...
}
```

FIG. 20

| P0-alpha-CL-loop set ID | P0 | alpha | CL-loop index | p0-List |
|---|---|---|---|---|
| 0 | -10 | 1.0 | 0 | (-8, -7) |
| 1 | -8 | 0.8 | 0 | (-6, -5) |
| 2 | -10 | 0.9 | 0 | (-8, -7) |
| 3 | -8 | 0.9 | 1 | (-6, -5) |
| 4 | -5 | 0.8 | 1 | (-2, -1) |
| ... | ... | ... | ... | ... |

FIG. 21

EP 4 383 782 A1

FIG. 22

FIG. 23

EP 4 383 782 A1

FIG. 24

10, 20

FIG. 25

## INTERNATIONAL SEARCH REPORT

| International application No. |
|---|
| **PCT/JP2021/029142** |

| A. | CLASSIFICATION OF SUBJECT MATTER |
|---|---|

*H04W 16/28*(2009.01)i
FI:   H04W16/28

According to International Patent Classification (IPC) or to both national classification and IPC

| B. | FIELDS SEARCHED |
|---|---|

Minimum documentation searched (classification system followed by classification symbols)

H04W16/28

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | SONY. Further enhancement on multi-beam operation[online]. 3GPP TSG RAN WG1 #105-e R1-2105151. 12 May 2021 section 2.2 | 1, 2, 4-6 |
| A | | 3 |

☐ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 January 2022** | **01 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010